(19) **Europäisches Patentamt / European Patent Office / Office européen des brevets**

(11) **EP 4 572 442 A1**

(12) **EUROPEAN PATENT APPLICATION**
published in accordance with Art. 153(4) EPC

(43) Date of publication:
**18.06.2025 Bulletin 2025/25**

(21) Application number: **23852839.2**

(22) Date of filing: **01.08.2023**

(51) International Patent Classification (IPC):
*H04W 64/00* (2009.01)   *H04W 36/00* (2009.01)
*H04W 36/32* (2009.01)   *H04W 24/08* (2009.01)
*H04W 84/06* (2009.01)   *H04B 7/185* (2006.01)

(52) Cooperative Patent Classification (CPC):
**H04B 7/185; H04W 24/08; H04W 36/00;**
**H04W 36/32; H04W 64/00; H04W 84/06**

(86) International application number:
**PCT/KR2023/011183**

(87) International publication number:
**WO 2024/034958 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.08.2022 KR 20220098693**

(71) Applicant: **Innovative Technology Lab Co., Ltd.
Seocho-gu, Seoul 06744 (KR)**

(72) Inventors:
- **LEE, Won Seok
  Seoul 06744 (KR)**
- **PARK, Dong Hyun
  Seoul 06744 (KR)**

(74) Representative: **Diehl & Partner
Patent- und Rechtsanwaltskanzlei mbB
Erika-Mann-Straße 9
80636 München (DE)**

(54) **METHOD AND DEVICE FOR UPDATING REFERENCE LOCATION IN WIRELESS COMMUNICATION SYSTEM**

(57)    A method of updating, by a user equipment (UE), a reference location based on non-terrestrial networks (NTN) in a wireless communication system may include acquiring reference location related information from a base station; as an operation of determining whether a distance between the UE and a reference location is less than a distance threshold based on the reference location related information, not performing measurement for cell reselection if the distance between the UE and the reference location, and performing the measurement for the cell reselection if the distance between the UE and the reference location is greater than the distance threshold; and performing reference location update based on a reference location related timer if the distance between the UE and the reference location is less than the distance threshold.

EP 4 572 442 A1

# FIG. 20

2010
UE

2020
NTN Cell A

S300
RRC message
(System information/RRC Release):
- ReferenceLocationUpdateTimer
- Reference location
- Epoch time (SFN & Subframe)
- Ephemeris
- UlSyncValidityDuration
- etc

S310
Camping on NTN Cell A

S320 UlSyncValidityDuration And/or ReferenceLocationUpdateTimer

S330
RRC message
(System information/RRC Release):
- ReferenceLocationUpdateTimer
- Reference location
- Epoch time (SFN & Subframe)
- Ephemeris
- UlSyncValidityDuration
- etc

**Description**

TECHNICAL FIELD

The present invention relates to a method and device for updating a reference location in a wireless communication system. The present invention relates to a method of updating a reference location based on non-terrestrial networks (NTN).

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, discussion is ongoing on a method of supporting uninterrupted communication services for user equipments (UEs) (e.g., vehicles/trains/ship-type terminals/personal smartphones) with mobility using not only terrestrial networks (TN) but also non-terrestrial networks (NTN) in a new communication system. In the following, a method of measuring neighbor cells and performing cell reselection in consideration of mobility of a UE between NTN and TN.

DETAILED DESCRIPTION

TECHNICAL SUBJECT

The present invention may provide a method and apparatus for updating a reference location considered in measurement for cell reselection in a wireless communication system.

The present invention may provide a method and apparatus for updating a reference location in consideration of a moving cell in a non-terrestrial networks (NTN) environment.

The present invention may provide a method and apparatus for setting a timer for reference location update in an NTN environment.

The present invention may provide a method and apparatus for updating a reference location based on system information in an NTN environment.

The present invention may provide a method and apparatus for updating a reference location based on satellite ephemeris information in an NTN environment.

The present invention may provide a method and apparatus for updating a reference location based on a reference location list in an NTN environment.

TECHNICAL SOLUTION

According to an embodiment, a method of updating, by a user equipment (UE), a reference location based on non-terrestrial networks (NTN) in a wireless communication system may include acquiring reference location related information from a base station; as an operation of determining whether a distance between the UE and a reference location is less than a distance threshold based on the reference location related information, not performing measurement for cell reselection if the distance between the UE and the reference location, and performing the measurement for the cell reselection if the distance between the UE and the reference location is greater than the distance threshold; and performing reference location update based on a reference location related timer if the distance between the UE and the reference location is less than the distance threshold.

Also, according to an embodiment, the reference location related information may include at least one of reference location information, satellite ephemeris information, reference location update timer information, uplink synchronization validity time information, and epoch time information.

Also, according to an embodiment, a validity start point to start at least one of a reference location update timer and a timer for an uplink synchronization validity time may be determined based on the epoch time information, and the reference location update may be performed by acquiring system information including the reference location information.

Also, according to an embodiment, a validity start point to start a reference location update timer may be determined based on the epoch time information, and the reference location update may be performed through satellite ephemeris information based on the reference location update timer.

Also, according to an embodiment, the reference location related information may include reference location list

3

information, the reference location list information may be configured with epoch time and a reference location corresponding to the epoch time, and the reference location update may be performed based on the reference location list information.

The features briefly summarized above with respect to the present disclosure are simply exemplary aspects of the detailed description of the present disclosure described below and are not construed as limiting the scope of the present disclosure.

EFFECT

According to the present disclosure, it is possible to provide a method of updating a reference location considered in measurement for cell reselection in a wireless communication system.

According to the present disclosure, it is possible to provide a method of updating a reference location in consideration of a moving cell in a non-terrestrial networks (NTN) environment.

According to the present disclosure, it is possible to provide a method of setting a timer for reference location update in an NTN environment.

According to the present disclosure, it is possible to provide a method of updating a reference location based on system information in an NTN environment.

According to the present disclosure, it is possible to provide a method of updating a reference location based on satellite ephemeris information in an NTN environment.

According to the present disclosure, it is possible to provide a method of updating a reference location based on a reference location list in an NTN environment.

The present disclosure is not limited to the aforementioned effects and still other effects not described herein may be clearly understood by one of ordinary skill in the art to which the present disclosure pertains from the following description.

BRIEF DESCRIPTION OF DRAWINGS

FIG. 1 illustrates an example of describing a new radio (NR) frame structure to which the present disclosure may apply.
FIG. 2 illustrates an NR resource structure to which the present disclosure may apply.
FIG. 3 illustrates non-terrestrial networks (NTN) including a transparent satellite to which the present disclosure may apply.
FIG. 4 illustrates NTN including a regenerative satellite without inter-satellite links (ISL) to which the present disclosure may apply.
FIG. 5 illustrates NTN including a regenerative satellite with ISL to which the present disclosure may apply.
FIG. 6 illustrates a user plane (UP) protocol stack structure in NTN including a transparent satellite to which the present disclosure may apply.
FIG. 7 illustrates a control plane (CP) protocol stack structure in NTN including a transparent satellite to which the present disclosure may apply.
FIG. 8 illustrates a timing advance calculation method to which the present disclosure may apply.
FIG. 9 illustrates an earth fixed cell scenario to which the present disclosure may apply.
FIG. 10 illustrates an earth moving cell scenario to which the present disclosure may apply.
FIG. 11 illustrates a method of mapping physical cell id (PCI) to satellite beams to which the present disclosure may apply.
FIG. 12 illustrates a reference location to which the present disclosure may apply.
FIG. 13 illustrates received signal strength according to a distance in TN and NTN to which the present disclosure may apply.
FIG. 14 illustrates a method of performing distance-based measurement for cell reselection to which the present disclosure may apply.
FIG. 15 illustrates a reference location update method to which the present disclosure may apply.
FIG. 16 illustrates a method of performing reference location update based on system information acquisition to which the present disclosure may apply.
FIG. 17 illustrates a method of performing reference location update to which the present disclosure may apply.
FIG. 18 illustrates a method of updating a reference location based on a new timer to which the present disclosure may apply.
FIG. 19 illustrates a method of performing reference location update based on a reference location update timer to which the present disclosure may apply.

FIG. 20 illustrates a method of performing reference location update based on system information acquisition to which the present disclosure may apply.

FIG. 21 illustrates Earth-Centered, Earth-Fixed (ECEF) coordinates and Ellipsoid-Point to which the present disclosure may apply.

FIG. 22 illustrates a reference location update method to which the present disclosure may apply.

FIG. 23 illustrates a method of updating a reference location based on satellite ephemeris information to which the present disclosure may apply.

FIG. 24 illustrates a method of updating a reference location based on satellite ephemeris information to which the present disclosure may apply.

FIG. 25 illustrates satellite movement and a change in a reference location to which the present disclosure may apply.

FIG. 26 illustrates a reference location list-based signaling procedure and a reference location update procedure to which the present disclosure may apply.

FIG. 27 is a flowchart illustrating a reference location update method to which the present disclosure may apply.

FIG. 28 is a flowchart illustrating a reference location update method to which the present disclosure may apply.

FIG. 29 is a diagram illustrating a device configuration to which the present disclosure may apply.

BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

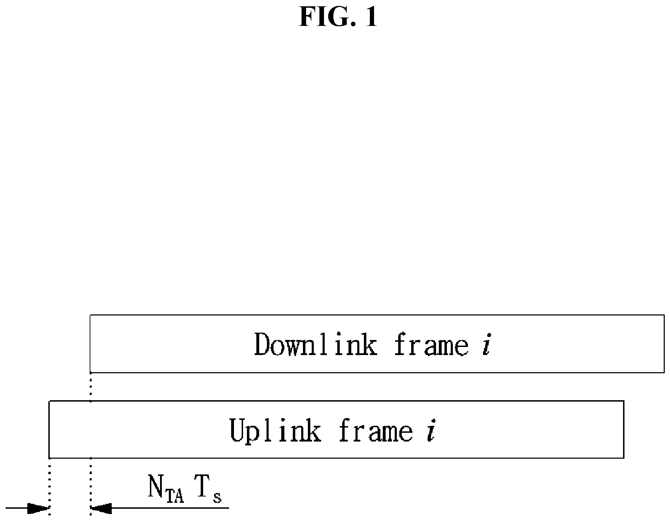

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as k=Ts/Tc=64.

Referring to FIG. 1, a time structure of a frame for a downlink/uplink (DL/UL) transmission may include $T_f = (\Delta f_{max} N_f/100) \cdot T_s = 10ms$. Here, a single frame may include 10 subframes corresponding to $T_{sf} = (\Delta f_{max} N_f/1000) \cdot T_s = 1ms$. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0~4 subframes and 5~9 subframes. Here, the half frame 1 may include 0~4 subframes and the half frame 2 may include 5~9 subframes.

The NTA represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = \left(N_{TA} + N_{TA,offset}\right)T_c$$

The $N_{TA,offset}$ denotes a TA offset value occurring due to a duplex mode difference and the like. Basically, in a frequency division duplex (FDD), $N_{TA,offset}=0$. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6GHz or less frequency, NTA,offset may be 39936TC or 2600TC. 39936TC=20.327μs and 25600TC=13.030μs. Also, in FR2 (Frequency Range 2) which is millimeter wave (mmWave), the NTA,offset may be 13792TC. At this time, 39936TC=7.020 μs.

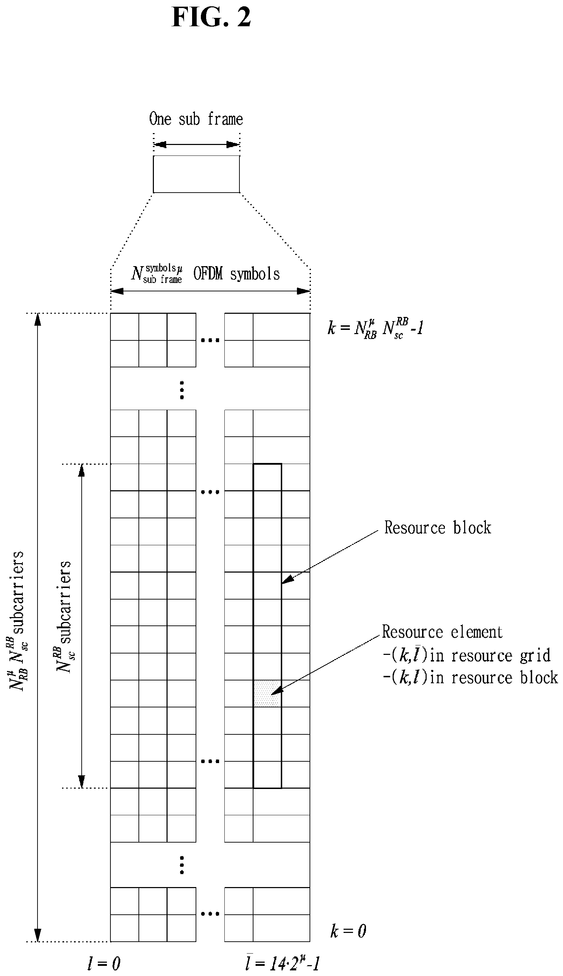

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB (nPRB) may be configured. The index for RB may be utilized within a specific frequency band or system bandwidth. The index for RB may be defined as shown in Equation 2 below. Here, the NRBsc represents the number of subcarriers per one RB and k represents the subcarrier index.

[Equation 2]

$$n_{PRB} = \left\lfloor \frac{k}{N_{sc}^{RB}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu$ = 2 and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu$ = 1 and 2 may be used in the unlicensed band of 6 GHz or less and an SCS corresponding to $\mu$ = 3 and 4 may be used in the unlicensed band above 6 GHz. Here, for example, if $\mu$ = 4, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480kHz may not be considered in Table 4, the present disclosure is not limited to such examples.

[Table 4]

| SCS | slots in 10ms | slots in 10ms | symbols in 10 ms |
|---|---|---|---|
| 15kHz | 10 | 20 | 140 |
| 30kHz | 20 | 40 | 280 |
| 60kHz | 40 | 80 | 560 |
| 120kHz | 80 | N/A | 1120 |
| 240kHz | 160 | N/A | 2240 |
| 480kHz | 320 | N/A | 4480 |

Also, for example, in the existing wireless communication system, communication was able to be performed based on terrestrial networks including a UE present on the ground and base stations present on the ground. The UE may access a network in a wireless manner. Here, when the UE moved, the UE was able to continuously receive the same service through another base station within a ground network. The UE was able to access the network and then access a specific service server through other wired or Internet networks. Also, the UE was able to receive a service connecting wired or wireless communication with another UE through the network.

However, a new wireless communication system may support communication of the UE not only through terrestrial networks but also through non-terrestrial networks (NTN). Here, NTN may refer to networks or some of the networks each using a mobile object floating in the air or space equipped with a base station or relay equipment. For example, NTN may support device-to-device communication services based on artificial satellites equipped with a communication function in low Earth orbit (LEO) and geostationary Earth orbit (GEO). As another example, NTN may support device-to-device communication services based on aircraft equipped with a communication function within unmanned aircraft systems (UAS), but are not limited thereto.

In the following, terrestrial networks (TN) are distinguishably described compared to non-terrestrial networks (NTN). That is, in the existing communication system, only terrestrial networks were present, so there was no need to distinguish them. On the other hand, in the following, NTN and TN are distinguished and described as a communication system capable of performing device-to-device communication based on NTN and, based thereon, a method of supporting device-to-device communication services is described.

For example, wireless communication services between a terrestrial base station and a wireless terminal or between mobile base stations are described as a mobile service, but are not limited thereto. Also, communication between mobile terrestrial base stations and one or more space base stations may be mobile satellite services. Also, wireless communication services between mobile terrestrial base stations and space base stations or between mobile terrestrial base stations through at least one space base station may be mobile satellite services, but are not limited thereto.

In the following, described is a method of performing communication based on a wireless communication system that supports all of mobile services and mobile satellite services. For example, technologies for NTN have been specifically introduced for satellite communication, but NTN may be introduced in a communication system (e.g., 5G system) of TN to operate together with TN. Here, the UE may simultaneously support NTN and TN. For the UE that simultaneously supports NTN and TN, the wireless communication system may require specific technologies for NTN in addition to long-term evolution (LTE) and new radio (NR) systems that are radio access technology (RAT), and a method for this is described below. For example, the following may be definition for each term in relation to NTN and TN.

### Non-terrestrial networks (NTN):

They are networks or some of the networks each using a mobile object floating in the air or space equipped with a base station or relay equipment for communication.

### NTN gateway:

It is a terrestrial base station or gateway present on the Earth's surface and equipped with radio access equipment enough to access a satellite. In general, the NTN gateway may be a transport network layer node (TNL).

### Feeder link:

It is a radio link between an NTN gateway and a satellite.

### Geostationary Earth orbit (GEO):

It is circular orbit 35,786 km above the Earth's equator, which matches the direction of Earth's rotation. An object or a satellite in orbit orbits with the same period as the Earth's rotation period. Therefore, when observed from the Earth, it appears to be present at a fixed location without movement.

### Low Earth orbit (LEO):

It is orbit between 300 km and 1500 km above the ground.

### Medium Earth orbit (MEO):

It is orbit present between LEO and GEO.

### Unmanned Aircraft Systems (UAS):

UAS are systems that generally operate at 8 km to 50 km above the ground, which may include High Altitude Platforms (HAPs). UAS may include at least one of Tethered UAS (TUA), Lighter Than Air UAS (LTA), and Heavier Than Air UAS (HTA) systems.

### Minimum elevation angle:

It is a minimum angle required for a terrestrial terminal to face a satellite or a UAS base station present in the air.

### Mobile services:

They are wireless communication services between a terrestrial base station and a wireless terminal or between mobile base stations.

### Mobile satellite services:

They may be wireless communication services between mobile terrestrial base stations and one or more space base stations, between mobile terrestrial base stations and space base stations, or between mobile terrestrial base stations through at least one space base station.

### Non-geostationary satellites:

They are satellites in LEO and MEO, and may be satellites that orbit the Earth with a period of about 1.5 to 10 hours.

## On board processing:

It is digital processing of an uplink radio frequency (RF) signal mounted to satellite or non-terrestrial equipment.

## Transparent payload:

It may imply changing a carrier frequency of an uplink RF signal and filtering and amplifying the same before transmitting the same through downlink.

## Regenerative payload:

It relates to transforming and amplifying an uplink RF signal before transmitting the same through downlink and transformation of a signal may include digital processing such as decoding, demodulation, re-modulation, re-encoding, and filtering.

## On board NTN base station (gNB):

It may imply an on-board satellite in which a base station (gNB) is implemented in a regenerative payload structure.

## On ground NTN base station (gNB):

It is a terrestrial base station in which a base station (gNB) is implemented in a transparent payload structure.

## One-way latency:

It is an amount of time used to reach from a wireless terminal to a public data network or from the public data network to the wireless terminal in a wireless communication system.

## Round trip delay (RTD):

It may be an amount of time used for an arbitrary signal to reach from a wireless terminal to an NTN-gateway or from the NTN-gateway to the wireless terminal and then return. Here, the returned signal may be a signal that contains a form or a message different from the arbitrary signal.

## Satellite:

It may be a mobile object in the space equipped with a wireless communication transceiver capable of supporting transparent payload or regenerative payload, and may be generally located in LEO, MEO, or GEO.

## Satellite beam:

It is a beam generated by an antenna of an on-board satellite.

## Service link:

It is a radio link between a satellite and a UE.

## User connectivity:

It is capability to configure and maintain data/voice/video transmission between a network and a UE.

## User throughput:

It is a data transmission rate provided to a UE.

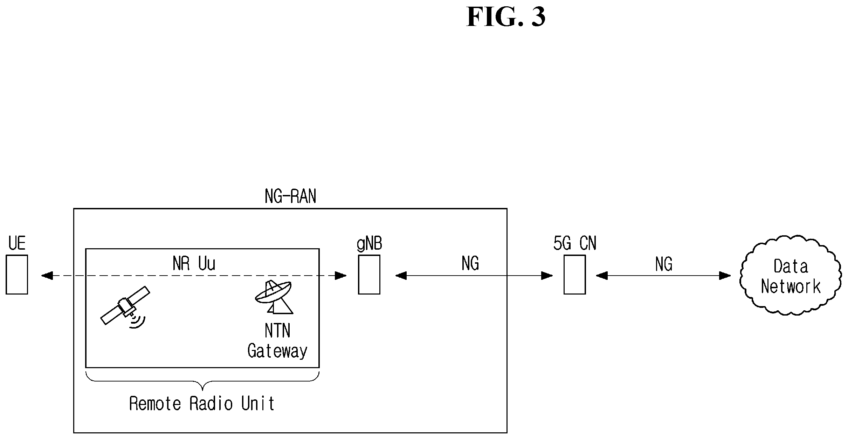

FIG. 3 illustrates NTN including a transparent satellite to which the present disclosure may apply.

Referring to FIG. 3, a UE included in NTN may include a terrestrial network terminal. For example, UEs of NTN and TN may include manned or unmanned mobile objects, such as ships, trains, buses, and airplanes, and may not be limited to a specific form. Referring to FIG. 3, transparent satellite payload generated through a network that includes the transparent satellite may be implemented in a manner equivalent to an RF repeater.

In more detail, the network including the transparent satellite may perform frequency conversion and amplification for wireless signals received in both uplink and downlink directions and may transmit wireless signals. Therefore, the satellite may perform the functionality of relaying an NR-Uu radio interface that includes both feeder link and service link directions, and the NR-Uu radio interface is described below.

As another example, referring to FIG. 3, a satellite radio interface (SRI) in feeder link may be included in an NR-Uu interface. That is, the satellite may not be an endpoint of the NR-Uu interface. Here, an NTN gateway may support all functions required to transmit signals defined in the NR-Uu interface. For example, other transparent satellites may be connected to the same base station on the ground. That is, a plurality of transparent satellites may be configured to be connected to a single terrestrial base station. The base station may be eNB or gNB, but may not be limited to a specific form.

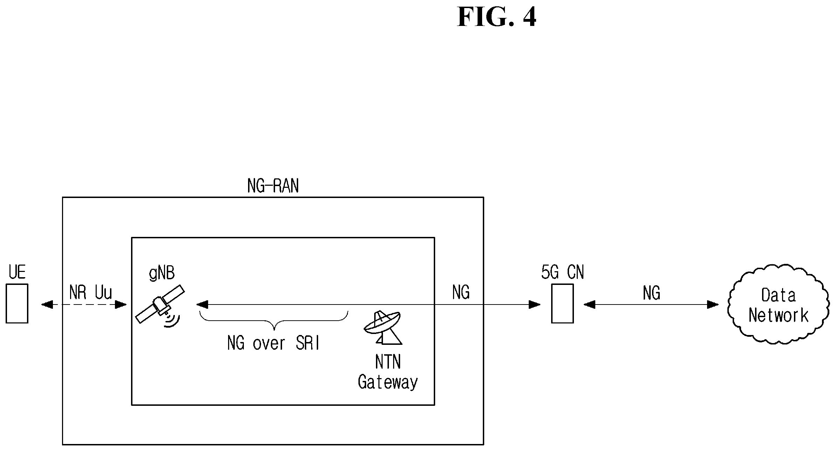

FIG. 4 illustrates NTN including a regenerative satellite without inter-satellite links (ISL) to which the present disclosure may apply.

Referring to FIG. 4, NTN may include a regenerative satellite. Here, the regenerative satellite may imply that a base station function is included within the satellite. For example, regenerative satellite payload generated through a network that includes the regenerative satellite may be implemented in a manner of regenerating a signal received from the ground.

In more detail, the regenerative satellite may receive a signal from the ground based on an NR-Uu radio interface between a UE and the satellite. As another example, the regenerative satellite may receive a signal from the ground through an SRI in feeder link between NTN gateways. Here, the SRI may be defined in a transport layer between the satellite and the NTN gateway. The transport layer may refer to the transport layer among layers defined as OSI 7 layers. That is, a signal from the ground may be transformed through digital processing, such as decoding, demodulation, remodulation, re-encoding, and filtering, based on the regenerative satellite, but is not limited thereto.

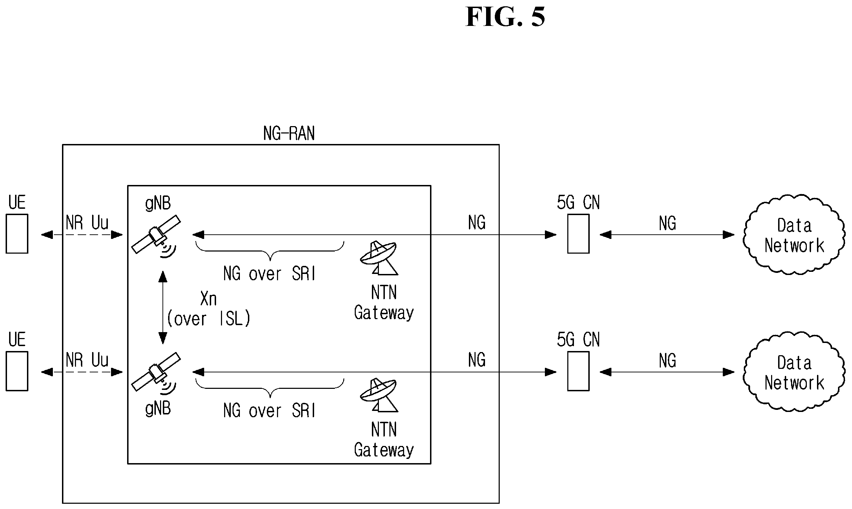

FIG. 5 illustrates NTN including a regenerative satellite with ISL to which the present disclosure may apply.

Referring to FIG. 5, ISL may be defined in a transport layer. As another example, ISL may be defined as a radio interface or a visible light interface, but are not limited to a specific embodiment. Here, an NTN gateway may support all functions of a transport protocol. Also, each regenerative satellite may become a base station and a plurality of regenerative satellites may be connected to the same 5G core network present on the ground.

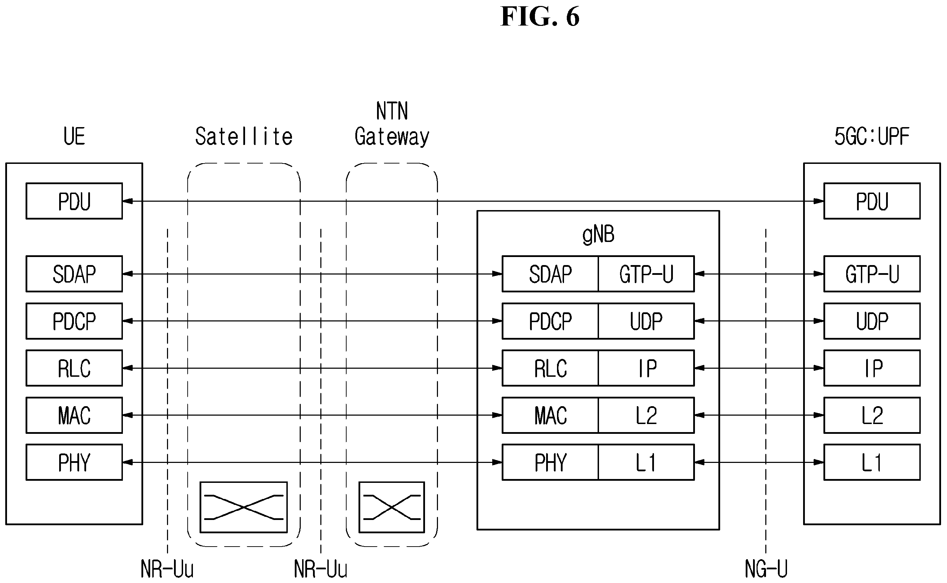

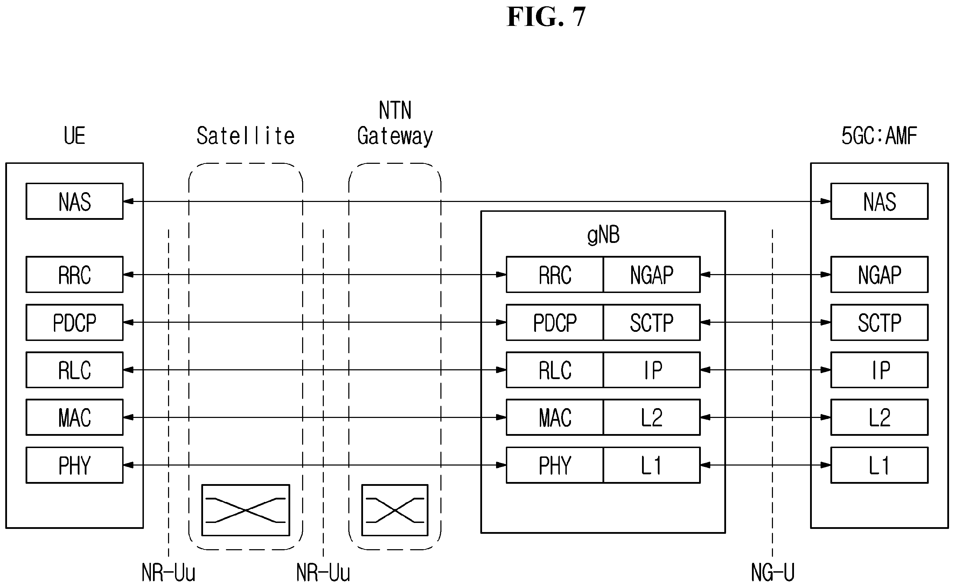

FIG. 6 illustrates a user plane (UP) protocol stack structure in NTN including a transparent satellite to which the present disclosure may apply. Also, FIG. 7 illustrates a control plane (CP) protocol stack structure in NTN including a transparent satellite to which the present disclosure may apply.

An NR Uu interface may be an interface defined as protocols for wireless connection between a UE and a baes station in an NR system. Here, the NR Uu interface may include a user plane defined as protocols for user data transmission, including NTN. Also, the NR Uu interface may include a control plane defined as protocols for transmitting signaling containing radio resource control information, including NTN. For example, a Medium Access Control (MAC) layer may be configured based on Radio Link Control (RLC), Packet Data Convergence Protocol (PDCP), Service Data Adaptation Protocol (SDAP), and Radio Resource Control (RRC). A protocol for each layer may be defined based on NR among 3GPP RAN-related standards, but may not be limited thereto.

For example, FIG. 6 may be a transparent satellite-based UP protocol stack structure. That is, in the satellite and the NTN gateway, only frequency conversion and amplification may be performed for a transparently received wireless signal and then, the signal may be transmitted. Also, FIG. 7 may be a transparent satellite-based CP protocol stack structure. That is, in the satellite and the NTN gateway, only frequency conversion and amplification may be performed for a transparently received wireless signal.

Based on the above, a wireless communication system that supports communication between UEs with NTN and TN may be considered. Here, NTN may have larger roundtrip time (RTT) between a UE and a base station compared to the existing TN. Therefore, from the UP perspective, the UE may need to store data to be transmitted through each of uplink and downlink in a buffer for a longer period of time due to an increase in RTT. That is, the UE may need to store more data in the buffer. Therefore, the UE may require a larger capacity of memory than before, which is described below.

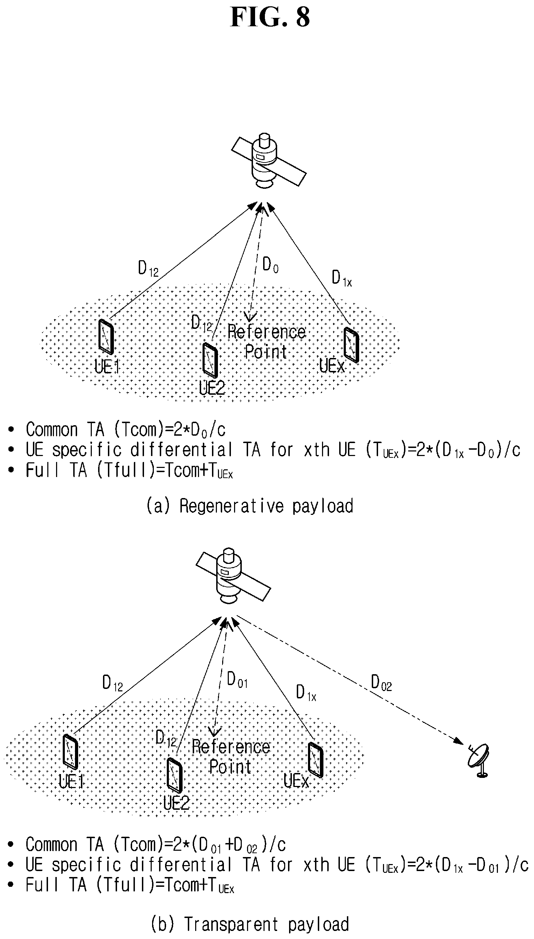

FIG. 8 illustrates a timing advance calculation method to which the present disclosure may apply. As described above, since a satellite included in NTN is located in the sky, signal RTT may increase. For example, in the case of LEO, the satellite may be present at the altitude of 300 km to 1200 km and in the case of GEO, the satellite may be present at the altitude of 36,000 km or more above the equator. Therefore, propagation delay in NTN may be significantly greater than that in TN. On the other hand, since NTN are present in the sky, cell coverage may be greater than that of terrestrial networks.

That is, since NTN may have different RTT and cell coverage compared to TN, there is a need to newly define a method of acquiring time synchronization for uplink transmission in NTN. For example, FIG. 8 may be a method of calculating a TA value generated according to a satellite payload type.

In more detail, (a) of FIG. 8 may be a method of calculating a timing advance (TA) value when a satellite payload type is regenerative payload. Also, (b) of FIG. 8 may be a method of calculating a TA value when the satellite payload type is transparent payload.

Here, for initial access and continuous maintenance of a timing advance (TA) value, a case in which the UE is aware of satellite ephemeris information and a location of the UE may be considered. Here, the satellite ephemeris information may indicate a distance between each satellite and a receiver and location information of each satellite. For example, the UE may acquire a TA value on its own and then apply the same (hereinafter, option 1). As another example, the UE may receive instruction for TA compensation and correction from the network (hereinafter, option 2).

For example, referring to (a) of FIG. 8, when the satellite payload type is regenerative payload, the satellite may directly serve as a base station. Here, the UE may calculate a TA value required for uplink transmission including a physical random access channel (PRACH). The UE may calculate a common TA value ($T_{COM}$) and a UE specific TA value ($T_{UEx}$). For example, the common TA value ($T_{COM}$) may be a TA value necessary for all UEs generated due to large cell coverage and long RTT of NTT. That is, since NTT are present in the sky and have a relatively longer distance than a distance between UEs, the common TA value ($T_{COM}$) that considers the long RTT in cell coverage may be required. Also, the UE specific TA value ($T_{UEx}$) may be a value generated due to a difference in a location of each UE within cell coverage. If the UE verifies a location of a satellite corresponding to a specific time in advance through satellite ephemeris information stored in advance or received from NTN and is aware of a location of the UE, the UE may calculate a distance between the satellite and the corresponding UE at the specific time. Therefore, the UE may acquire the TA value on its own and then correct the TA value and, through this, may determine the TA value.

Through the aforementioned description, the UE may perform UE-to-UE uplink timing alignment received from the base station as full TA compensation.

As another example, the UE may perform downlink and uplink frame timing alignment on the network side. When the satellite payload type is transparent payload as shown in (b) of FIG. 8, the satellite may perform filtering and amplification of a wireless signal and may transmit the signal to the NTN gateway. That is, the satellite may operate like an RF repeater. Here, in some cases, the NTN gateway may need to be changed based on continuous movement of the satellite. In (b) of FIG. 8, the common TA value ($T_{COM}$) may be determined based on a sum of distance $D_{01}$ between a reference location (reference point) and the satellite and distance $D_{02}$ between the satellite and the NTN gateway. Here, feeder link may change in response to a change in the NTN gateway based on movement of the satellite. That is, a distance between the satellite and the NTN gateway may vary based on the changed feeder link. Therefore, the common TA value may be changed, and update needs to be performed in the corresponding UE. Also, in the case of setting offset between downlink frame timing and uplink frame timing in the network, a case in which a TA value generated due to feeder link is not corrected using a full TA compensation method may need to be additionally considered. Also, when the UE is capable of calculating only a UE specific differential TA value ($T_{UEx}$), the UE needs to verify a single reference location (reference point) for each beam or each cell and needs to transmit corresponding information to other UEs. In the case of setting offset between downlink frame timing and uplink frame timing in the network, the network needs to manage offset information regardless of the satellite payload type. Here, for example, the network may also provide a value for TA correction to each UE, and is not limited to the aforementioned embodiment.

As another example, a method of indicating TA compensation and correction in a network (option 2) may be considered. Here, a common TA value may be generated based on common elements for propagation delay shared by all UEs present within coverage of cell or beam of a satellite. The network may transmit the common TA value to UEs for each cell or beam of each satellite based on a broadcast method. The common TA value may be calculated in the network, assuming at least one reference location for each cell or beam of each satellite. Also, a UE-specific TA value ($T_{UEx}$) may be determined based on a random access procedure defined in the existing communication system (e.g., Release 15 or Release 16 of existing NR system). Here, for example, in the case of applying a long TA value and a negative TA value, a new field may be required in a random access message. For example, when the network provides a timing change rate to the UE, the UE may support TA value correction based on the timing change rate.

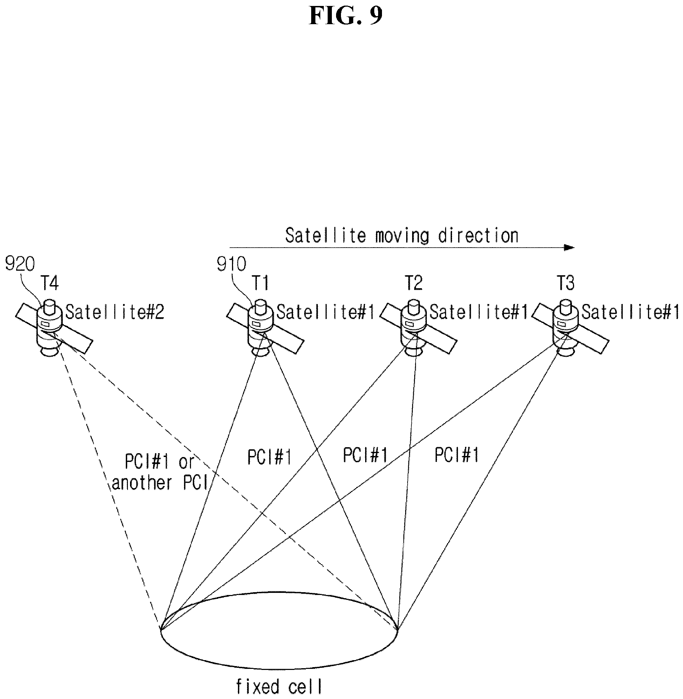

FIG. 9 illustrates an earth fixed cell scenario to which the present disclosure may apply.

Referring to FIG. 9, a fixed cell may be a cell in which a location of a signal transmitted from a satellite is fixed. For example, since the satellite moves over time, antennas and beams need to vary to ensure service coverage is fixed at a specific location, thereby making it possible to maintain the fixed cell. Here, for example, in FIG. 9, a satellite 1 910 may maintain the fixed cell while changing antennas and beams during T1 to T3. Here, if a specific time (T4) elapses, the satellite 1 910 may no longer service the corresponding location and the satellite 2 920 may provide services at the corresponding location, thereby maintaining service continuity. Here, after time T4, a cell or a beam of the satellite 2 920 that services the same location as the location at which the satellite 1 910 provides services in the previous time (T1 to T3) may maintain characteristics of a cell or a beam of the satellite 1 910, and is not limited to the aforementioned embodiment.

As a more detailed example, in the case of providing services through the satellite 1 910 and the satellite 2 920, at least one of a physical cell id (PCI) value and system information may remain the same. That is, as a cell with fixed service coverage, configuration may be generally performed based on satellites capable of changing the angle of an antenna and a beam among satellites in LEO and MEO excluding GEO.

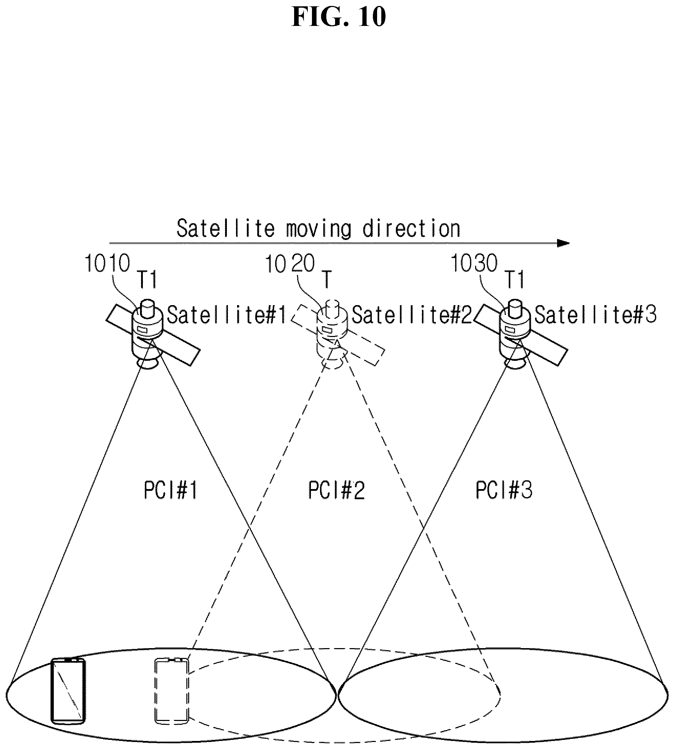

On the other hand, FIG. 10 illustrates an earth moving cell scenario to which the present disclosure may apply. For example, a cell with moving serving coverage may be an earth moving cell.

For example, referring to FIG. 10, each of a satellite 1 1010, a satellite 2 1020, and a satellite 3 1030 may provide services to its own cell with different PCI. Here, an earth moving cell may be in the form in which an antenna and a beam used for a satellite to transmit a signal to the ground are fixed and service coverage changes as the satellite moves over time. The earth moving cell may be configured based on satellites with the fixed angle of antenna and beam among satellites in LEO and MEO excluding GEO. Here, the corresponding satellites may have advantages, such as low price and low failure rate compared to satellites capable of adjusting the angle of antenna and beam.

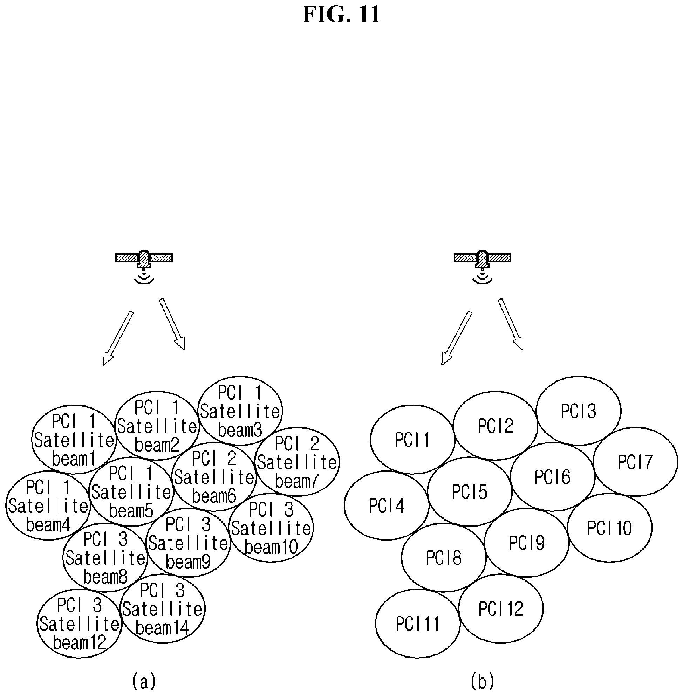

Also, FIG. 11 illustrates a method of mapping PCI to satellite beams to which the present disclosure may apply.

For example, the PCI may refer to an index that may logically identify a single cell. That is, beams with the same PCI value may be included in the same cell. For example, referring to (a) of FIG. 11, a single PCI may be assigned to a plurality of satellite beams. On the other hand, referring to (b) of FIG. 11, a single PCI may be assigned to each satellite beam from a single satellite. For example, a satellite beam may include one or more synchronization signal block (SSB) (SS/PBCH block) beams. A single cell (or PCI) may include up to L SSB beams. Here, L may be 4, 8, 64, or 256 according to a size of frequency band and/or subcarrier band, but is not limited to the aforementioned embodiment. That is, for L, similar to terrestrial networks (TN) corresponding to the existing communication system (NR system), one or more SBS indexes may be used for each PCI. Through this, SSBs transmitted through different beams may be distinguished, and an SSB index may be mapped to a logically defined antenna port or a physically separately formed beam.

For example, an NTN accessible UE may be a UE that supports a global navigation satellite system (GNSS) function. However, the NTN accessible UE may include a UE that does not support the GNSS function. As another example, NTN may support a UE that supports the GNSS function, but does not secure location information through the GNSS, and is not limited to the aforementioned embodiment.

As described above, the UE may perform communication through NTN. For example, the UE may receive 5G/B5G NTN-based non-terrestrial networks-based services. Through this, the UE may escape regional, environmental, spatial, and economic constraints for radio access services (e.g., LTE, NR, WiFi, etc.) based on installation of terrestrial networks equipment. For example, based on the above, advanced radio access technology provided from terrestrial networks may be applied to non-terrestrial networks platforms (e.g., satellite and UAV). Through this, various radio access service products and technologies may be provided with advanced network technology.

The NTN platform may be equipped with an NR signal relay function or a base station (gNB, eNB) function in space or at high altitude and may be operated as a kind of mirror. For example, as already mentioned, the function of the NG-RAN-based NTN architecture may be implemented with "Transparent payload-based NTN" and "Regenerative payload-based NTN" structures, which is described above.

Also, for example, NTN technology refers to the expanded network structure and technology of the 5G Integrate Access and Backhaul (IAB) architecture and may be used for wider coverage and more radio access services. Integration of NTN and TN may ensure service continuity and scalability of 5G system.

As a detailed example, NTN and TN integrated networks may provide significant gain in terms of 5G target performance (e.g., user experience data rate and reliability) in urban and suburban areas. As another example, NTN and TN integrated networks may ensure connectivity not only in very dense areas (e.g., concert hall, sport stadium, shopping center, etc.) but also in fast-moving objects such as airplane, high-speed train, and ship. As another example, NTN and TN integrated networks may simultaneously use data transmission services from NTN and TN through a multi-connection function. Here, by selectively utilizing a better network depending on traffic characteristics and traffic loading degree, both efficiency and economic feasibility of 5G wireless transmission services may be achieved.

A UE present on general plain may use wireless data services by simultaneously connecting NTN and TN. Also, the UE may provide wireless data access services for a poor environment or area in which it is difficult to simultaneously connect one or more NTN platforms (e.g., two or more LEO/GEO satellites) and to support the same in TN. Through this, the UE may be utilized in association with various services. In particular, NTN and TN integrated networks may improve reliability of autonomous driving services and perform an efficient network operation, and are not limited to the aforementioned embodiment.

Here, for example, services that may be provided by V2X technology based on LTE mobile communication or standard technology based on IEEE 802.11p standard may have similar limitations. An LTE V2X standard may be provided to meet requirements defined in C-ITS (e.g., time delay of about 100 ms, reliability of about 90%, and generation of messages of tens to hundreds of bytes in size about 10 times per second). Therefore, new V2X services that require low latency, high reliability, and high-capacity data traffic, and improved positioning may be required. Here, for example, standardization of 5G radio access technology (e.g., new radio (NR)) is ongoing based on the above. Also, for example, to more flexibly respond to requirements of new services than LTE, standardization of various numerologies and frame structures and L2/L3 protocol structures corresponding thereto is in progress. By introducing 5G mobile communication technology-based sidelink radio access technology based on the above, it is possible to support improved V2X services, such as autonomous driving or remote driving. To this end, NTN may be utilized.

As another example, NTN may be utilized to support IoT services in a poor environment and area not covered by terrestrial networks. For example, depending on the purpose of use, IoT equipment may need to frequently perform wireless communication with minimal power consumption in a poor channel environment (e.g., mountains, desert, or sea). The previously proposed cellular-based technology may mainly aim at mobile broad band (MBB) services. Therefore, in terms of radio resource utilization and power control, the efficiency of providing IoT services may be low and flexible operations may not be supported. Also, for example, in the case of non-cellular-based existing IoT technology, there may be limitation in providing various IoT services due to limited mobility support and coverage. Considering the above, NTN may be applied, through which services may be improved.

Also, for example, if 5G mobile communication-based sidelink technology is applied through NTN, wider coverage and mobility may be provided to users through a more efficient wireless communication method than current Bluetooth/WiFi-based wearable equipment. Additionally, it may be differentiated from the existing communication standards in applications (e.g., wearable multimedia services) that require a high data transmission rate and mobility support using wearable equipment.

As another example, through NTN, it is possible to improve public safety communication networks and to expand disaster communication coverage. For example, through NTN, high-reliability, low-latency technology of 5G mobile communication system may provide public services such as disaster response. For example, it is possible to support mobile broadband services even in deserts or high mountains using a mobile base station such as a drone that supports 5G mobile communication. That is, in the case of applying NTN to public services, it is possible to expand disaster communication coverage by covering various areas.

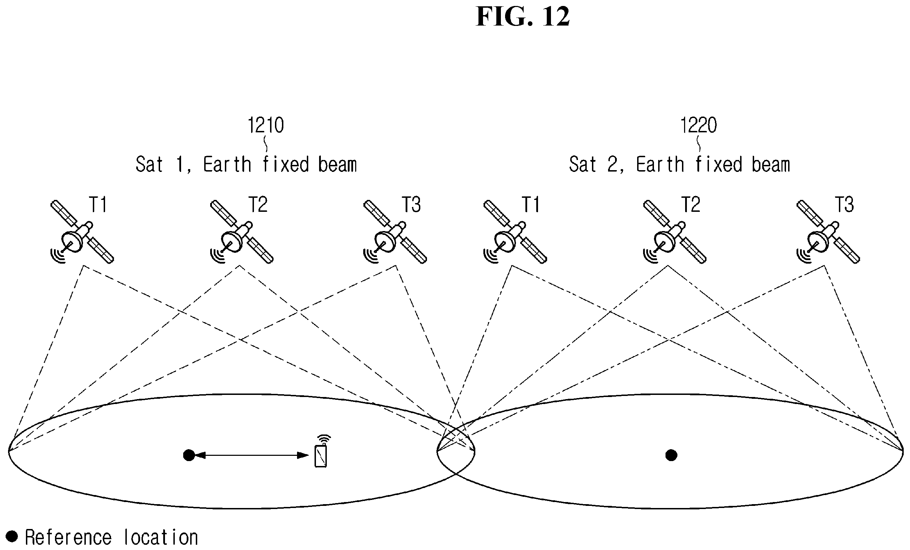

FIG. 12 illustrates a reference location to which the present disclosure may apply. Referring to FIG. 12, satellites 1210 and 1220 having an earth-fixed beam may provide services for a specific period of time to a fixed location based on the fixed beam. In an NTN environment, a UE-satellite distance is large, so signal strength within a cell may be similar. Therefore, a UE in an RRC idle state may consider a reference location as a condition for performing neighbor cell measurement for cell reselection. That is, the UE in the RRC idle state may perform cell measurement for cell reselection based on a distance between the UE and the reference location. In detail, a UE present within coverage of the satellite 1 (Sat 1) 1210 may acquire reference location information through system information from a network. The UE may verify a distance between the UE and the reference location based on a location of the UE. Here, if the distance between the UE and the reference location is greater than a distance threshold, the UE may recognize a current location of the UE as cell edge and may perform measurement for a neighbor cell. That is, the UE may perform cell measurement for cell reselection in consideration of the distance between the reference location and the UE.

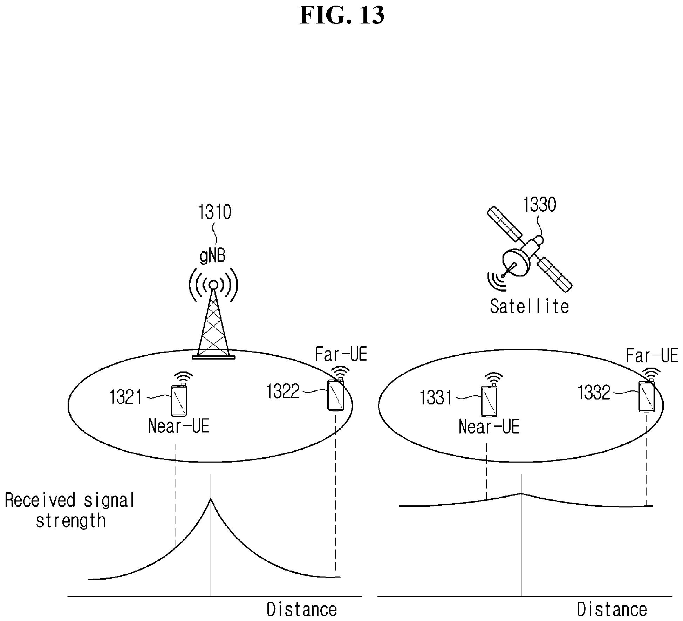

FIG. 13 illustrates received signal strength according to a distance in TN and NTN. Referring to (a) of FIG. 13, in a TN environment, UEs 1321 and 1332 present within coverage of a base station (gNB) 1310 may have a great difference in signal strength based on a distance between the base station 1310 and the corresponding UE. In detail, for a transmission signal, received signal strength of the UE (near-UE) 1321 present at the center of coverage of the base station 1310 present on the ground may be greater than received signal strength of the UE (far-UE) 1322 present at the edge of coverage and the difference may be large enough to be distinguished. On the other hand, referring to (b) of FIG. 13, UEs 1331 and 1332 present within coverage of a satellite 1330 in an NTN environment may be considered. Here, since a transmission signal is generated from the satellite 1330 present at a high location, received signal strength of the UE (near-UE) 1331 present close to the center of coverage and received signal strength of the UE (far-UE) 1332 preset at the edge of coverage may not be large. Therefore, in the NTN environment, there may be a limitation in performing cell reselection in consideration of only the received signal strength. In detail, since the difference in received signal strength within satellite coverage is not large, the UE may not perform measurement for cell reselection. Therefore, a time for neighbor cell SSB search, signal strength measurement, and camping may be insufficient. Considering this, the UE may perform measurement for cell reselection in consideration of a distance between a reference location and the UE in the NTN environment, as described above.

Also, for example, the UE within the aforementioned fixed cell (earth fixed cell) or fixed beam may acquire information for time-based cell reselection through system information. For example, the UE may acquire t-service using a duration of time during which coverage of the satellite is maintained through the system information (or service time). The UE may perform cell reselection based on t-service time information. Here, t-service time may be a time at which a service for a fixed cell is provided. Therefore, if the UE receives t-service information through system information, the UE may consider the corresponding cell as the fixed cell. On the contrary, if the UE does not receive t-service information through system information, the UE may consider the corresponding cell as a moving cell (earth-moving cell). That is, the UE may implicitly acquire fixed cell and moving cell information through t-service information.

As another example, as described above, if the distance between the reference location and the UE within the fixed cell becomes greater than the distance threshold, the UE may perform measurement for cell reselection. That is, when the UE is present within fixed cell coverage, the UE may perform measurement for cell reselection using reference location information or t-service information. Here, the reference location of the moving cell and the reference location of the fixed cell may differ. In detail, since the moving cell moves according to movement of the satellite, the reference location also needs to move. Therefore, when the UE performs measurement for cell reselection based on the reference location of the moving cell, there may be a problem that, if measurement is performed through the existing reference location determining method, the UE that does not need measurement performs the measurement. This will be described below. Meanwhile, in the NTN environment, the UE may operate in a frequency band of 10 GHz or more, and based thereon, may perform communication through the satellite. Also, for example, mobility, service continuity, emergency call, and public warning system considering high propagation delay and satellite movement may be provided in the NTN environment, but is not limited to a specific embodiment.

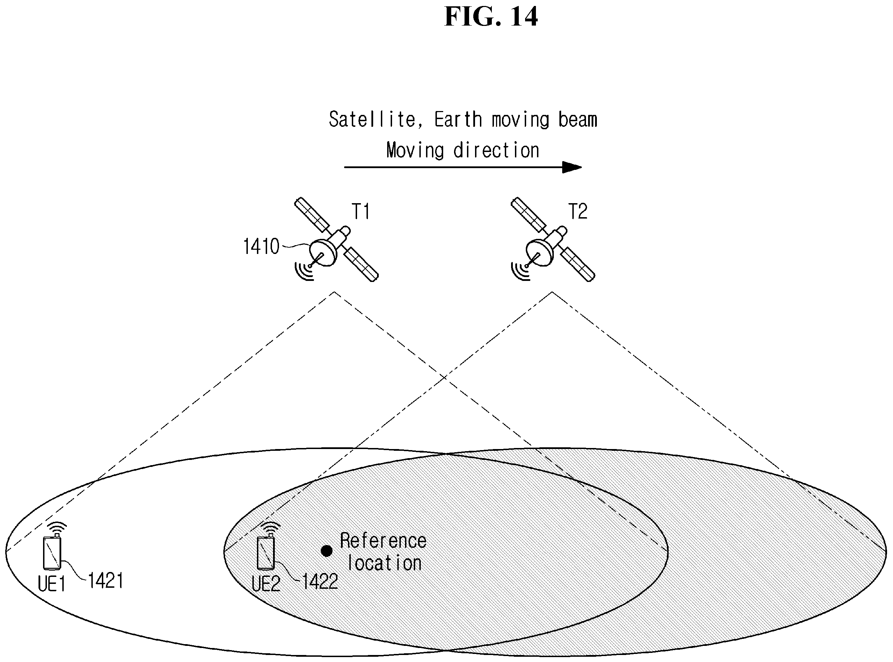

FIG. 14 illustrates a method of performing distance-based measurement for cell reselection to which the present disclosure applies. Referring to FIG. 14, a moving cell may be provided based on a satellite 1410. Here, a case in which a UE performs measurement for cell reselection in consideration of a reference location may be considered. In detail, at time T1, a UE 1 1421 may perform neighbor cell measurement for cell reselection since a distance between the UE 1 1421 and the reference location is greater than a distance threshold. On the other hand, a UE 2 1422 may not perform neighbor cell measurement for cell reselection since a distance between the UE 2 1422 and the reference location is less than the distance threshold. Here, reference location and distance threshold information may be provided to the UE through system information. In detail, the reference location and distance threshold information may be included in NTN-specific system information (e.g., SIB 19). Here, if the UE shifts to an RRC idle/inactive state, the aforementioned value may not be changed. Therefore, even at time T2, the UE may operate based on the same information. For example, in FIG. 14, at the time T2, the UE 2 1422 may need to perform measurement for a neighbor cell at coverage edge and to attempt camping on another cell. However, since the distance between a location of the UE 2 1422 and the reference location is less than the distance threshold, the UE 2 1422 may not perform measurement for the neighbor cell and thus, may not perform a cell reselection procedure. That is, in the moving cell, there may be a limitation in performing measurement for cell reselection by applying the reference location in the same manner as in the fixed cell. Here, for example, a specific operation for cell reselection by the UE may be as shown in Table 5 below. For example, the UE may perform measurement based on at least one of frequency priority, signal strength of a serving cell, and the distance threshold, as shown in Table 5 below. Also, for example, when the UE receives system information (e.g., SIB19) including t-service information from the serving cell, the UE may need to perform intra/inter-frequency and inter-RAT measurement at all times before t-service regardless of conditions shown in Table 5. Here, t-service information may represent epoch time for servicing coverage of the fixed cell. Also, for example, the UE may measure high priority intra/inter-frequency and inter-RAT frequencies at all times regardless of Table 5 and, through this, may perform cell reselection.

[Table 5]

| |
|---|
| - If priority of NR inter-frequency or inter-RAT frequency is higher than that of current NR frequency: |
| - UE performs NR inter-frequency or inter-RAT frequency measurement at all times. |
| - If priority of NR inter-frequency or inter-RAT frequency is equal to or lower than that of current NR frequency: |
| - Signal strength (Srxlev) and signal quality (Squal) of serving cell are greater than signal strength threshold (s-NonIntraSearchP) and signal quality threshold (s-NonIntraSearchQ) within SIB2: |
| - If distance between UE and reference location is less than distance threshold within SIB 19 provided from serving cell, UE may not perform NR inter-frequency or inter-RAT frequency measurement. |
| - If distance between UE and reference location is greater than distance threshold within SIB19 provided from serving cell, UE performs NR inter-frequency or inter-RAT frequency measurement at all times. |
| - If there is no distance threshold within SIB19 provided from serving cell, UE may not perform NR inter-frequency or inter-RAT frequency measurement. |
| - If signal strength (Srxlev) and signal quality (Squal) of serving cell are less than signal strength threshold (s-NonIntraSearchP) and signal quality threshold (s-NonIntraSearchQ) (s-IntraSearchP) and signal quality threshold (s-IntraSearchQ) within SIB2: |
| - UE performs NR inter-frequency or nter-RAT frequency measurement at all times (for legacy NR mobility) |

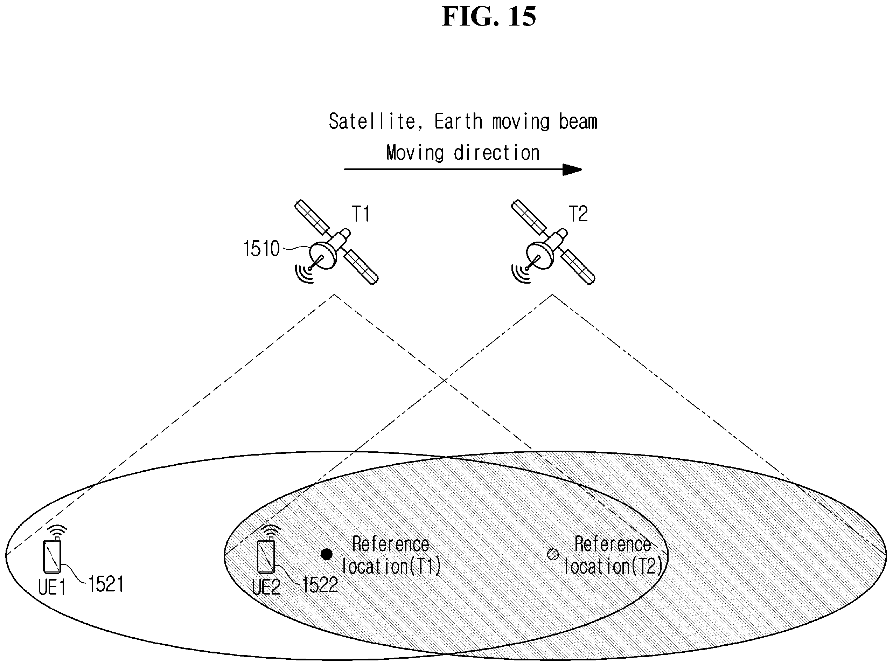

Also, FIG. 15 illustrates a reference location update method applicable to the present disclosure. As described above, if a reference location is applied in a moving cell in the same manner as in a reference location of a fixed cell, a problem may occur in measurement conditions. Therefore, in the case of the moving cell, the reference location may need to be updated. For example, in FIG. 15, the reference location may be updated based on a moving cell that moves according to movement of a satellite 1510. Here, when the reference location update is not performed, the UE may not perform cell reselection and thus, needs to update the reference location every specific time.

In the following, a method of updating the reference location is described by considering the above. For example, at time T2, a UE 2 1522 may perform cell reselection without using reference location (T1) information configured at time T1 and with using updated reference location (T2) information. In detail, if a distance between a location of the UE 2 1522 and a reference location (T2) is greater than a distance threshold at time T2, the UE2 1522 may perform measurement for cell reselection and may attempt camping. In consideration of the above, a reference location update method is described below.

**Reference location update**

The reference location may be newly defined or updated according to movement of the satellite in the moving cell. Here, the reference location may be updated based on a parameter indicating a time interval (e.g., timer, epoch time, system frame number (SFN) & subframe). As another example, the reference location may be indicated in a list format based on epoch time. This is described below. For example, a system frame number (SFN) may refer to a number of a specific system frame with a length of 10 ms. Also, a subframe may be a frame structure with a time length of 1 ms within the subframe. As another example, another time unit may be considered and may not be limited to a specific time unit.

Here, for example, reference location update may be performed based on a reference location update time, or if a timer expires. Here, the reference location update may be performed based on satellite ephemeris information and system information acquisition. As another example, the reference location update may be performed through a reference location list. Here, the reference location list refers to a set of epoch time and a reference location and may indicate a reference location used at a specific location of the satellite in association with satellite ephemeris information, which is described below.

For example, satellite ephemeris information may indicate satellite location information at a specific time or period. The satellite ephemeris information refers to Earth-Centered, Earth-Fixed (ECEF) coordinate information and may express coordinates (X, Y, Z) of the satellite from the center of the Earth in km units. In detail, for example, the satellite ephemeris information may be expressed in the form of "X= 19151.529 km, Y= - 37578.251 km, Z= 17.622 km" at "2022-06-27 08:00:00.000" as epoch time (day, hr, min, sec). As another example, the satellite ephemeris information may be expressed as "X= 19151.053 km, Y= -37578.556 km, Z= 17.359 km" at "2022-06-27 08:05:00.000" as epoch time (day, hr, min, sec). Here, velocity (km/s) in each of X, Y, and Z axes may be expressed and is not limited to a specific embodiment. Also, for example, the reference location may be provided in the form of ellipsoid-point. The reference location may be indicated through bits indicating north/south directions and bits indicating latitude/longitude, and ellipsoid-point may be as shown in Table 6 below, but may not be limited to a specific embodiment.

[Table 6]

```
Ellipsoid-Point ::= SEQUENCE {
latitudeSign              ENUMERATED {north, south},
degreesLatitude           INTEGER (0..8388607),              -- 23 bit field
degreesLongitude          INTEGER (-8388608..8388607)        -- 24 bit field
}
```

In the following, a method of updating a reference location based on a timer (hereinafter, method 1) and a method of updating a reference location based on a reference location list (hereinafter, method 2) are described.

For example, the UE may update the reference location at specific time intervals set by the network. Here, the specific time interval may be indicated using the timer. The UE may update the reference location through satellite ephemeris information at specific time intervals indicated by the network. As another example, the UE may acquire system information and may update the reference location at specific time intervals indicated by the network.

For example, epoch time may be a value that is expressed as an integer value and expressed in a specific unit based on a specific point in time. In detail, for example, epoch time may be a value that is expressed in units of 10 ms from 00:00:00 on January 1, 1900, as "INTEGER (0..549755813887)," but may not be limited thereto. That is, a parameter indicating a specific point in time may be used and is not limited to a specific embodiment. Here, reference location update may be performed through system information acquisition. For example, the UE may update the reference location every uplink synchronization validity duration (e.g., UlSyncValidityDuration). As another example, the UE may update the reference location based on a new timer as a reference location update timer. As another example, reference location update may be performed based on satellite ephemeris information. The UE may update the reference location based on the new timer as the reference location update timer.

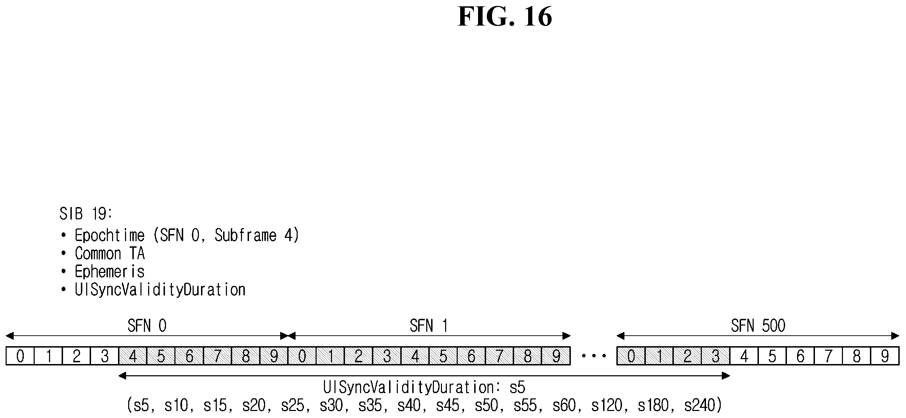

FIG. 16 illustrates a method of performing reference location update based on system information acquisition applied to the present disclosure.

Referring to FIG. 16, in an NTN environment, a UE may acquire system information for uplink synchronization. That is, the network may transmit feeder link delay and coordinates of a satellite to the UE through system information and, through this, uplink synchronization may be performed. Here, since the satellite is constantly moving, the feeder link delay and the satellite coordinates may continuously change. Therefore, when a change in delay for uplink synchronization occurs, the network may modify parameters (e.g., Common TA, ephemeris) for uplink synchronization within system information and may transmit the same to the UE. Also, the UE may acquire system information at each specific time (e.g., UlSyncValidityDuration) and may update information for uplink synchronization. Here, the specific time may be an uplink synchronization validity time (UlSyncValidityDuration). For example, the specific time refers to a duration of time during which uplink synchronization is valid and may be a type of timer. That is, at the specific time (e.g., UlSyncValidityDuration) included in system information, the timer may operate as a duration of time during which uplink synchronization is valid based on parameters. In the following, for clarity of description, the specific time (e.g., UlSyncValidityDuration) included in system information is referred to as an uplink synchronization validity time. However, it is only a configuration for convenience of description and is not limited the aforementioned name.

Here, the uplink synchronization validity time may indicate a parameter for uplink synchronization (e.g., Common TA), satellite ephemeris information, and validity time of other parameters according to satellite movement. Here, the network may indicate, to the UE, a start location of a duration of time during which parameters are valid as the uplink synchronization validity time, using SFN and subframe, based on epoch time. The UE may acquire system information before the uplink synchronization validity time expires, may update the parameter for uplink synchronization (e.g., Common TA), satellite ephemeris information (e.g., ephemeris), and other parameters related to movement of the satellite, and may restart the uplink synchronization validity time. For example, when the UE does not update the parameter until the uplink synchronization validity time expires, the UE may determine that the parameters are not valid and may suspend uplink transmission.

In detail, for example, referring to FIG. 16, the network may indicate a start point at which the parameter for uplink synchronization (e.g., Common TA), satellite ephemeris information (e.g., ephemeris), and parameters related to movement of the satellite are valid through the system information and based on SFN and subframe through a parameter for epoch time. Also, the uplink synchronization validity time may be indicated based on units of second. In detail, for example, (s5, s10, s15, s20, s25, s30, s35, s40, s45, s50, s55, s60, s120, s180, s240) may be indicated as the uplink synchronization validity time and is not limited to a specific embodiment.

In FIG. 16, the network may indicate SFN 0 and subframe 4 as a validity start point through the system information and the parameter for epoch time. Therefore, the UE may start the uplink synchronization validity time in subframe 4 within SFN 0. Here, if the uplink synchronization validity time is set to 5 seconds, the UE may determine that the parameter for uplink synchronization (e.g., Common TA), satellite ephemeris information (e.g., ephemeris), and parameters related to movement of the satellite acquired through the system information are valid up to 5 seconds (i.e., SFN 500, subframe 3). Here, the UE may acquire system information before the uplink synchronization validity time expires, and may update the parameter for uplink synchronization (e.g., Common TA), satellite ephemeris information (e.g., ephemeris), and parameters related to movement of the satellite.

Here, for example, in a fixed cell environment, the reference location may not change for t-service time, or may vary based on a long period. Therefore, the reference location may be updated only through an SI modification procedure (i.e., paging message). On the other hand, as described above, in a moving cell environment, the reference location needs to be continuously updated. Therefore, the existing location may be continuously updated based on the uplink synchronization validity time or timer.

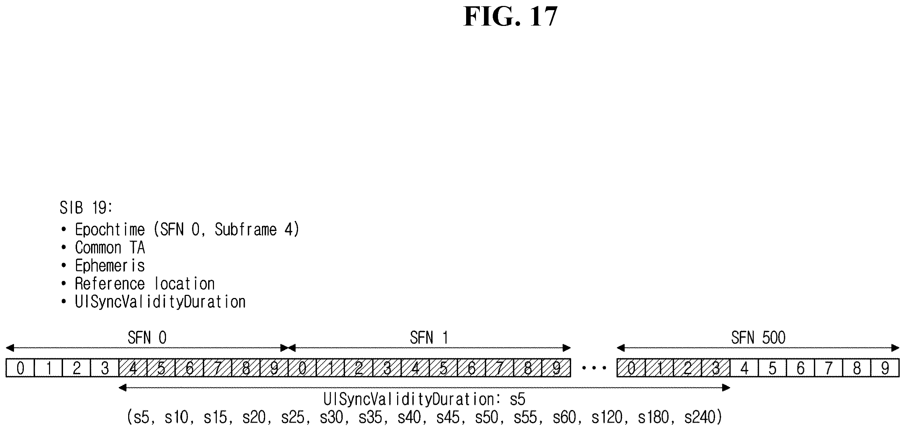

In detail, for example, FIG. 17 illustrates a method of performing reference location update applicable to the present disclosure. Referring to FIG 17, the network may indicate a validity time and a start location of a reference location through system information. For example, the validity time of the reference location may be the aforementioned uplink synchronization validity time, and the start location may be indicated using SFN and subframe through a parameter for epoch time. In FIG. 17, when the parameter for epoch time indicates SFN 0 and subframe 4, a valid start location of the reference location may be SFN 0 and subframe 4. The UE may operate the timer in SFN 0 and subframe4 as a start location. For example, the timer may correspond to the aforementioned uplink synchronization validity time. If the timer is set to 5 seconds, the validity time of the reference location may be up to subframe 3 within SFN 500. Therefore, the UE may acquire system information and may update the reference location before subframe 3 within SFN 500 ends. Here, for example, the system information may be NTN specific system information within SIB 19, but may not be limited thereto. The system information may be periodically scheduled and transmitted through a downlink shared channel. That is, the UE may receive an SI message that includes SIB 19 within SIB window indicating SIB 1 and, through this, may perform reference location update before the uplink synchronization validity time expires. Based on the above, when the reference location is updated through the uplink synchronization validity time, the uplink synchronization validity time may be indicated as (s5, s10, s15, s20, s25, s30, s35, s40, s45, s50, s55, s60, s120, s180, s240) and accordingly may be set from 5 seconds to 240 seconds.

However, reference location update may be information for performing measurement for cell reselection, different from uplink synchronization. Therefore, reference location update needs to use a timer value other than the aforementioned validity time such that the measurement for cell reselection may be performed in detail. That is, the new timer for, reference location update may be used and, in this regard, description is made. Here, for example, the reference location may be updated based on system information acquisition. As another example, the reference location may be updated based on satellite ephemeris, which is described below.

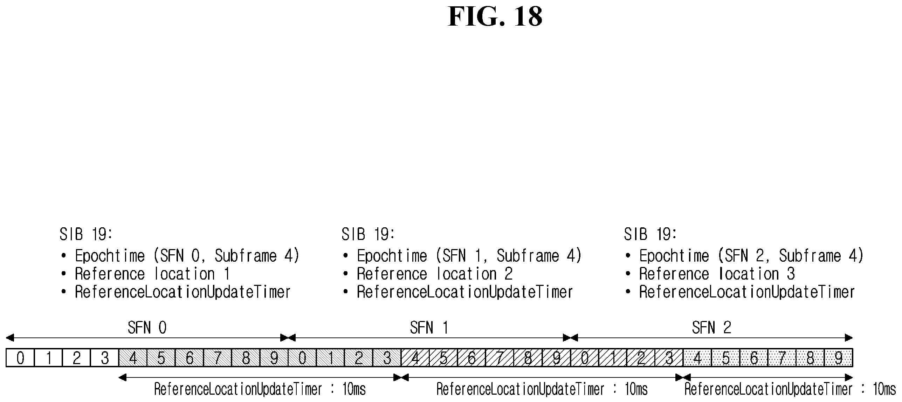

In detail, for example, FIG. 18 illustrates a method of updating a reference location based on a new timer applicable to the present disclosure. Referring to FIG. 18, a start point of a reference location may be indicated using SFN and subframe through a parameter for epoch time. Here, a UE may operate a new timer (ReferenceLocationUpdateTimer) at the start point of the reference location. For example, the new timer may be a reference location update timer. However, it is only a name for convenience of description and may not be limited to the name. That is, the new timer may be used for reference location update and is referred to below as a reference location update timer for clarity of description.

In detail, in FIG. 18, the UE may operate the reference location update timer at a location of subframe 4 within SFN 0. The UE may update the reference location before the reference location update timer expires. For example, if the reference location update timer is set to 10 ms, the UE may operate the corresponding timer in subframe 4 within SFN 0. The UE may update the reference location by acquiring system information up to subframe 4 within SFN 1 based on the reference location update timer. In detail, for example, the reference location may be changed from reference location 1 to reference location 2 based on reference location update. However, for example, since the reference location may not change within the timer, reference location 1 and reference location 2 may be the same and are not limited to a specific embodiment. For example, the reference location may be changed when subsequent system information is acquired. That is, the reference location used in subframes from subframe 4 within SFN 0 to subframe 3 within SFN 1 and the reference location in subframes from subframe 4 within SFN 1 to subframe 3 within SFN 2 may be the same. Then, the reference location applied from subframe 4 within SFN 2 may be different and is not limited to the aforementioned embodiment.

Here, for example, reference location update may be performed even after the reference location update timer expires. When the UE receives system information and updates the reference location after the reference location update timer expires, the UE may reset a reference location validity start point using SFN and subframe through a parameter for epoch time within the system information and may operate the reference location update timer.

As another example, when the UE does not perform reference location update until the reference location update timer expires, the UE may perform measurement for cell reselection based on the existing location. As another example, when the UE does not perform reference location update until the reference location update timer expires, the UE may determine that the existing reference location is not valid and may not perform an operation of performing measurement through the reference location, but is not limited to a specific embodiment.

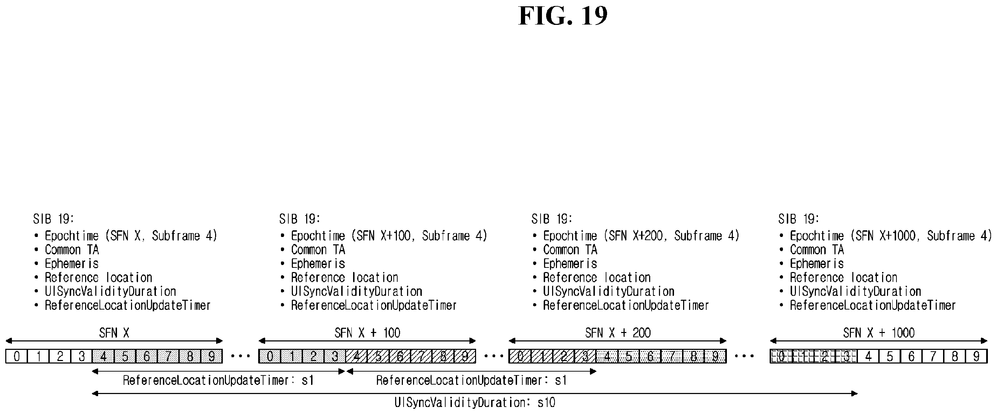

FIG. 19 illustrates a method of performing reference location update based on a reference location update timer applicable to the present disclosure.

Referring to FIG. 19, a parameter for an uplink synchronization validity time for updating an uplink synchronization parameter and a reference location update timer parameter may separately operate. For example, a UE may indicate, from the network, a start point at which a parameter for uplink synchronization (e.g., Common TA), satellite ephemeris information (e.g., ephemeris), and other parameters related to movement of a satellite are valid as an epoch time parameter through SFN and subframe. Here, the UE may operate each of the timer for the uplink synchronization validity time and the reference location update timer at the valid start point. Also, the UE may configure the valid start point for each of the uplink synchronization validity time and the reference location update timer as an epoch time parameter through SFN and subframe. For example, in FIG. 19, the UE may operate the reference location update timer and the timer for the uplink synchronization validity time in subframe 4 within SFN X. Here, for example, the reference location update timer may be set to 1 second and the timer for the uplink synchronization validity time may be set to 10 seconds. Here, SFN X may be a value from 0 to 1023 and, if X + 1000 becomes greater than 1023, SFN may start again from 0.

The UE may acquire system information before or after the reference location update timer expires and may perform reference location update. For example, if the reference location update timer is set to 1 second, the UE may operate the corresponding timer in subframe 4 within SFN X, and may update the reference location in subframe 4 within SFN X + {100, 200, 300, 400, 500, 600, 700, 800, 900} through system information acquisition before or after the timer expires. On the other hand, the uplink synchronization parameter may be updated through system information acquisition before or after the timer for the uplink synchronization validity time expires. That is, if the timer for the uplink synchronization validity time is set to 10 seconds, the UE may operate the timer for the uplink synchronization validity time in subframe 4 within SFN X, and may update the uplink synchronization parameter in subframe 4 within SFN X + 1000 through system information acquisition before or after the timer expires.

Here, the reference location may not change for each reference location update timer and the reference location within system information may change at subsequent reference location update. That is, the reference location used in subframes from subframe 4 within SFN X to subframe 3 within SFN X + 100 and the reference location used in subframes from subframe 4 within SFN X + 100 to subframe 3 within SFN X + 200 may be the same. On the other hand, the reference location applied from subframe 4 within SFN X + 200 may be different. That is, in the above description, each timer may operate at the same validity time start point and is not limited to a specific embodiment.

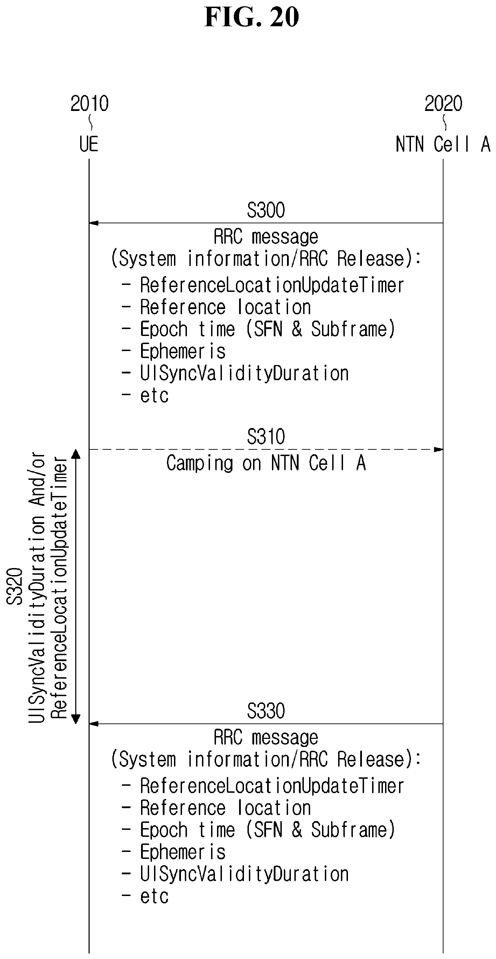

FIG. 20 illustrates a method of performing reference location update based on system information acquisition applicable to the present disclosure.

Referring to FIG. 20, a UE 2010 may update a reference location by acquiring system information before or after a timer (uplink synchronization validity duration timer and/or reference location update timer) expires. The UE 2010 may be in an RRC connected state with a network through an NTN cell A 2020. As another example, the UE 2010 may shift to an RRC idle state after connecting to the network. Referring to FIG. 20, the UE 2010 may acquire at least one of a reference location update timer (ReferenceLocationUpdateTimer), reference location, epoch time, and satellite ephemeris information (ephemeris) through an RRC message (e.g., system information, RRC Release) from the NTN cell A 2020 (S300). Here, the UE 2010 in the RRC connected state may receive an RRC release message and may shift to the RRC idle state. Here, the UE 2010 in the RRC idle state may receive system information. Also, the UE 2010 in the RRC idle state may be camping on the NTN cell A 2020 (S310). Here, the UE 2010 may use at least one of an uplink synchronization validity time timer and a reference location update timer as a timer for reference location update (S320). For example, the aforementioned timer may start at a start point set based on SFN and subframe indicated through an epoch time parameter. The UE 2010 may perform reference location update by acquiring system information before or after at least one of the uplink synchronization validity time timer and the reference location update timer.

In detail, for example, when the UE 2010 updates the reference location based on the uplink synchronization validity time timer, the UE 2010 may acquire parameter information to be updated through an RRC message (S330). Here, parameters to be newly updated may be a parameter for uplink synchronization (e.g., Common TA), satellite ephemeris information (e.g., ephemeris), and reference location information for reference location update.

As another example, when the UE 2010 updates the reference location based on the reference location update timer, a parameter to be newly updated may be reference location information required for reference location update. Here, for example, if the timer expires, but reference location update is not performed, the UE may determine that the reference location is not valid and may not verify a distance condition until system information is acquired. Then, when the UE acquires system information and performs reference location update, the UE may verify a distance condition from a start location (epoch time) at which the reference location is valid within the system information and may determine measurement for cell reselection.

As another example, a valid start location (epoch time) of the reference location and a valid start location (epoch time) of uplink synchronization may be different. In detail, for example, a start location (epoch time) for applying uplink synchronization may be subframe Y within SFN X, and a start location (epoch time) for applying the reference location may be subframe M within SFN Z. As another example, the start location (epoch time) for applying uplink synchronization may be subframe Y within SFN X, and the start location (epoch time) for applying the reference location may be subframe M within SFN X.

As another example, the UE may verify SFN and subframe for the valid start point through the epoch time based on system information. Here, the UE may operate all of the uplink synchronization validity time timer and the reference location update timer based on the valid start point. Then, the UE may acquire the system information before or after the uplink synchronization validity time timer and the reference location update timer expire. Here, the system information may include reference location information for reference location update and information on uplink synchronization validity duration. Therefore, if the system information is received, the UE may update the reference location and may determine that synchronization is also valid. Therefore, if the system information is received, the UE may reset all of the uplink synchronization validity time timer and the reference location update timer and may reset all of the uplink synchronization validity time timer and the reference location update timer in SFN and subframe indicated by the parameter for epoch time included in the system information. That is, if the system information is acquired after starting the uplink synchronization validity time timer and the reference location update timer at the valid start point regardless of a reference location update status and an uplink synchronization maintain status, the UE may reset all of the uplink synchronization validity time timer and the reference location update timer and may start them at a new validity start point, and is not limited to a specific embodiment.

As another example, reference location update may be performed through satellite ephemeris information rather than system information acquisition, which is described below.

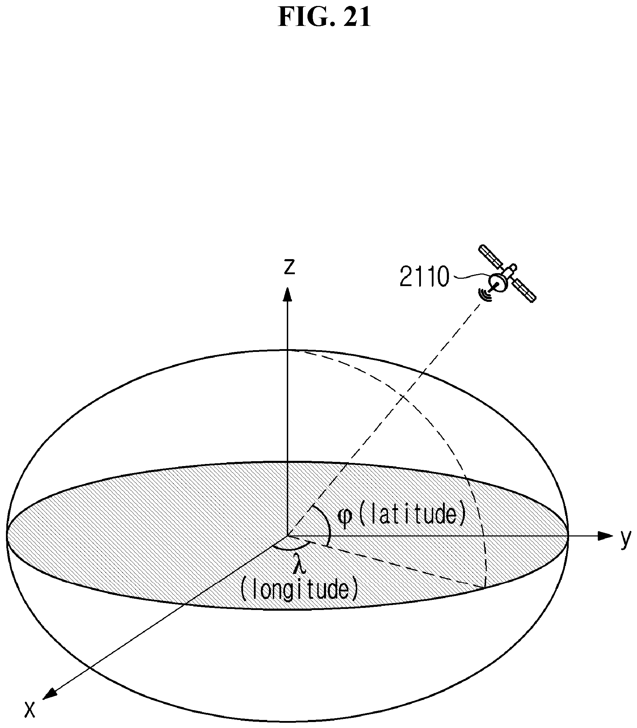

FIG. 21 illustrates Earth-Centered, Earth-Fixed (ECEF) coordinates and Ellipsoid-Point applicable to the present disclosure. For example, satellite ephemeris information (ephemeris) may be expressed based on ECEF coordinate information, and reference location information may be expressed by ellipsoid-point. Here, ECEF coordinate information may indicate x, y, and z values at the center of the Earth and a moving speed on each axis in km/s. Ellipsoid-point information may indicate longgutude ($\lambda$), latitude ($\varphi$), and whether latitude is located in the Northern Hemisphere or the Southern Hemisphere relative to the equator. For example, Table 7 and Table 8 may be examples of satellite coordinates and speed according to epoch time. Referring to Table 8, a start location at which coordinates and speed of the satellite are valid may be indicated through specific SFN and subframe. For example, a network may transmit one epoch time (SFN & subframe) and satellite coordinates and speed corresponding thereto to a UE through system information (e.g., SIB19).

Then, the network may update the system information and may modify epoch time and satellite coordinates and speed.

In detail, for example, the UE may acquire system information. Here, a parameter for epoch time may be included in the system information, and a valid start point may be indicated through SFN and subframe. For example, when the UE verifies epoch time corresponding to SFN 100 and subframe 2 and satellite coordinates and speed corresponding thereto, the UE may determine that the satellite coordinates and speed are valid from a time corresponding to SFN 100 and subframe 2. Then, when the UE acquires system information and verifies epoch time corresponding to SFN 200 and subframe 2 and satellite coordinates and speed corresponding thereto, the UE may update epoch time and satellite coordinates and speed corresponding thereto.

For example, in the case of updating the reference location based on satellite ephemeris information (ephemeris), the reference location expressed as ellipsoid-point may be derived through satellite coordinates and speed. In detail, for example, it may be expressed as longitude $(\lambda) = \arctan\left(\frac{\sqrt{x^2+y^2}}{x}\right)$ and latitude $(\varphi) = \arctan\left(\frac{z}{\sqrt{x^2+y^2}}\right)$. Here, the Northern Hemisphere and the Southern Hemisphere may be verified depending on the latitude. Therefore, the UE may derive the ellipsoid-point according to ephemeris ECEF coordinate information and speed of a serving cell.

[Table 7]

| Epoch time (day, hr, min, sec) | x [km] | y [km] | z [km] | dx/dt [km/s] | dy/dt [km/s] | dz/dt [km/s] |
|---|---|---|---|---|---|---|
| 2030-11-10 11:00:00.000 | 19151.529 | -37578.251 | 17.682 | -0.00151 | -0.00102 | -0.00106 |
| 2030-11-10 11:05:00.000 | 19151.073 | -37578.556 | 17.359 | -0.00152 | -0.00101 | -0.00109 |
| 2030-11-10 11:10:00.000 | 19150.614 | -37578.855 | 17.029 | -0.00154 | -0.00099 | -0.00112 |
| 2030-11-10 11:15:00.000 | 19150.150 | -37579.151 | 16.690 | -0.00155 | -0.00098 | -0.00114 |

[Table 8]

| Epoch time (SFN & Subframe) | x [km] | y [km] | z [km] | dx/dt [km/s] | dy/dt [km/s] | dz/dt [km/s] |
|---|---|---|---|---|---|---|
| 100 & 2 | 19151.529 | -37578.251 | 17.682 | -0.00151 | -0.00102 | -0.00106 |
| 200 & 2 | 19151.073 | -37578.556 | 17.359 | -0.00152 | -0.00101 | -0.00109 |
| 300 & 2 | 19150.614 | -37578.855 | 17.029 | -0.00154 | -0.00099 | -0.00112 |
| 400 & 3 | 19150.150 | -37579.151 | 16.690 | -0.00155 | -0.00098 | -0.00114 |

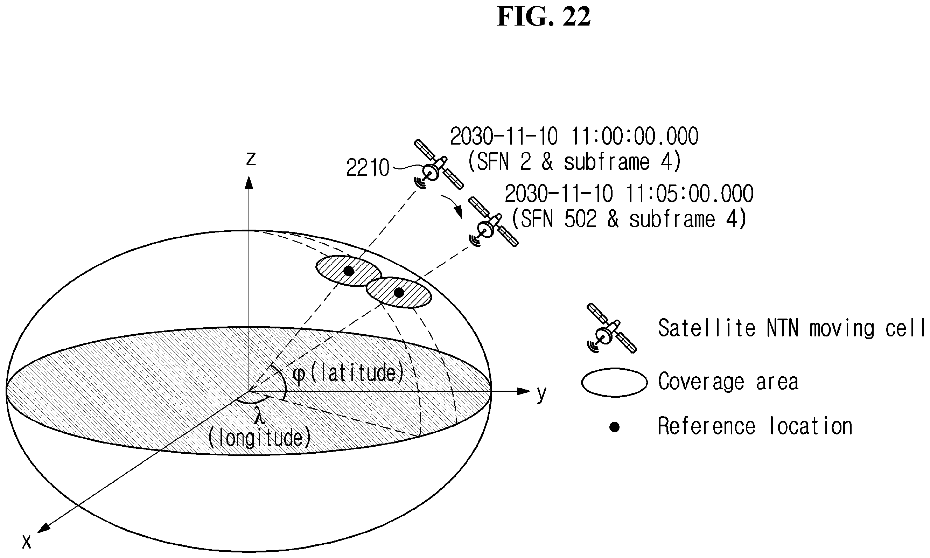

FIG. 22 illustrates a reference location update method applicable to the present disclosure. For example, when a reference location is updated in consideration of movement of a satellite 2210 in an NTN moving cell, a UE may perform accurate cell reselection.

As described above, a network may provide satellite ephemeris information to the UE. For example, referring to FIG. 22, as specific satellite ephemeris information, satellite ECEF coordinates and speed may be provided at 2030-11-10 11:00:00.000 (SFN 2 & subframe 4). As another example, as specific satellite ephemeris information, satellite ECEF coordinates and speed may be provided at 2030-11-10 11:05:00.000 (SFN 502 & subframe 4). Therefore, the UE may derive ECEF coordinates according to the satellite speed between 2030-11-10 11:00:00.000 (SFN 2 & subframe 4) and 2030-11-10 11:05:00.000 (SFN 502 & subframe 4) and may convert this to ellipsoid-point.

For example, the network may indicate a reference location update timer and the UE may update the reference location based on satellite ephemeris information every time the timer expires. For example, the UE may determine the reference location according to Unix time (epoch time, SFN, subframe) received through system information and then, may operate the timer. Here, if the timer expires, the UE may update the reference location based on satellite ephemeris information.

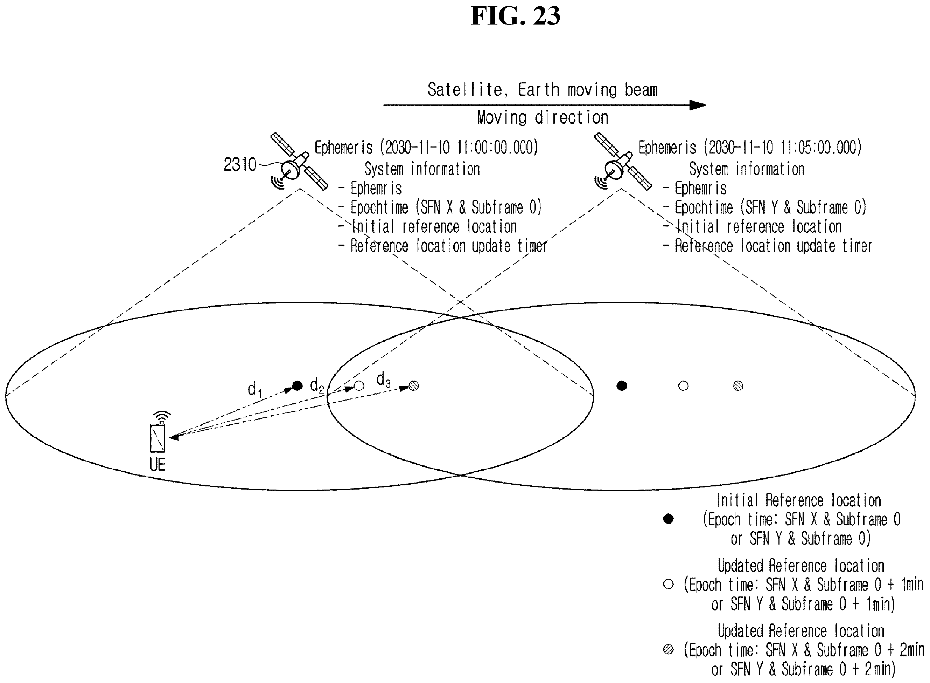

FIG. 23 illustrates a method of updating a reference location based on satellite ephemeris information applicable to the present disclosure. For example, in FIG. 23, expression of 2030-11-10 11:00:00.000 refers to the time of year, month, day, hour, minute, and second, and satellite coordinate and speed information may be transmitted through satellite ephemeris information. Also, based on a parameter for epoch time within the system information, SFN X and subframe 0 that is a start point at which an uplink synchronization parameter (e.g., Common TA, Ephemeris) is applied may be indicated. Here, a case in which a reference location update timer is set to 1 minute may be considered. However, it is only an example for clarity of description and is not limited to the aforementioned embodiment. Referring to FIG. 23, the reference location update timer may operate in subframe 0 within SFN X that is epoch time. That is, an initial reference location may be a reference location between subframe 0 and 1 minute within SFN X. Here, the UE may update the reference location based on a valid start point and the initial reference location and may determine measurement for cell reselection.

In more detail, the UE may verify a distance ($d_1$) from the initial reference location between subframe 0 and 1 minute within SFN X, and may not perform measurement for cell reselection if it is less than a distance threshold. Also, the UE may update the reference location at 1 minute from subframe 0 within SFN X at which the reference location update timer expires, and may restart the reference location update timer. Also, the UE may verify a distance ($d_2$) from the updated reference location between subframe "0+ 1 minute" within SFN X and subframe "0+ 2 minutes" within SFN X, and may not perform measurement for cell reselection if it is less than the distance threshold. Also, the UE may update the reference location at a time corresponding to subframe "0 + 2minutes" within SFN X at which the reference location update timer expires, and may restart the reference location update timer. Also, the UE may verify a distance ($d_3$) from the updated reference location between subframe "0 + 2 minutes" SFN X and subframe "0 + 3 minutes" within SFN X, and may perform measurement for cell reselection if it is greater than the distance threshold. Then, after a predetermined period of time elapses (e.g., 5 minutes), the UE may acquire initial reference location information applied from subframe 0 within SFN Y that is new epoch time based on movement of a satellite 2310. That is, the UE may perform reference location update based on the reference location update timer until information on the initial reference location newly acquired based on system information is acquired. Here, the reference location update timer is expressed in time units, but may not be limited thereto. In detail, for example, the reference location update timer may indicate to update at a point at which "SFN modulo X = 0." When the network desires to indicate the reference location to be updated every SFN (10 ms), X = 1 may be set. When the network desires to indicate the reference location to be updated every two SFNs (20 ms), X = 2 may be set. As another example, specific epoch time may be indicated. Epoch time may be a value that is expressed as an integer value and expressed in a specific unit based on a specific point in time. In detail, for example, epoch time may be a value that is expressed in units of 10 ms from 00:00:00 on January 1, 1900, as "INTEGER (0..549755813887)," but may not be limited thereto. Here, in the network, specific epoch time may be indicated between time intervals, SFN X & subframe 0 and SFN Y & subframe 0 and, based thereon, reference location update may be performed. That is, in the case of arriving at specific epoch time after SFN X & subframe 0, the UE may update the reference location.

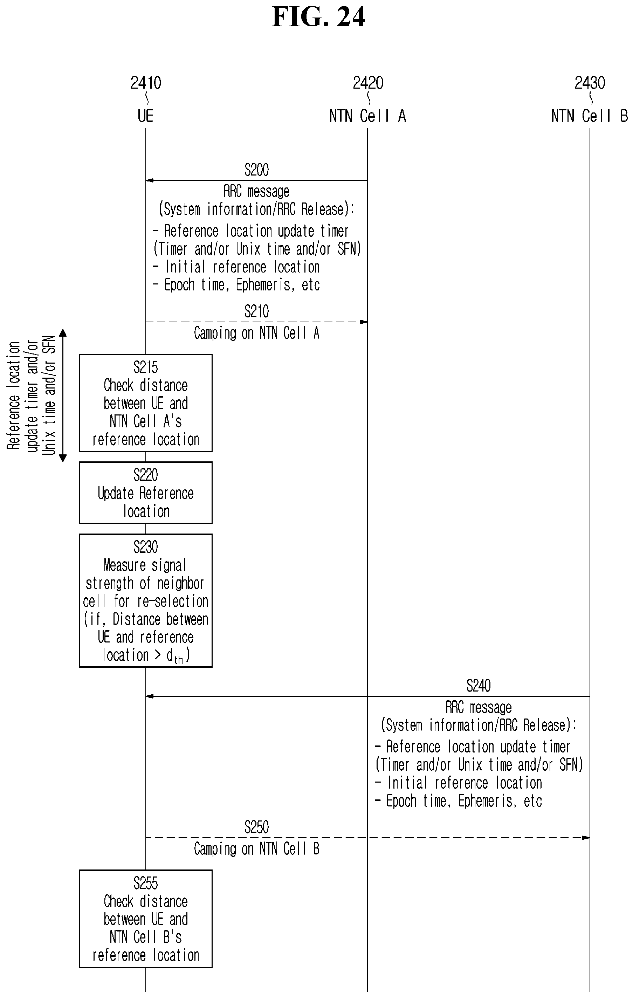

FIG. 24 illustrates a method of updating a reference location based on satellite ephemeris information. Referring to FIG. 24, reference location update may be performed based on at least one of a reference location update timer, Unix time, and SFN interval. A UE 2410 may be in an RRC connected state with a network through an NTN cell A 2420. Also, for example, the UE 2410 may be in a state in which the UE 2410 is previously connected to the network and is shifted to an RRC idle state. For example, the UE 2410 may receive an RRC message (system information, RRC release) from the NTN cell A 2420 (S200). Here, the RRC message may include the reference location update timer. For example, the reference location update timer may be indicated based on at least one of the timer, Unix time, and SFN. Also, the RRC message may be indicated to the UE 2410 by further including at least one of an initial reference location, epoch time, and satellite ephemeris information (ephemeris). Here, the UE 2410 in the RRC connected state may receive the RRC release message and may shift to the RRC idle state. Also, the UE 2410 in the RRC idle state may receive system information. Here, the UE 2410 in the RRC idle state may be camping on the NTN cell A 2420 (S210). Also, the UE 2410 in the RRC idle state may determine the initial reference location based on epoch time. The UE 2410 may verify a distance from a reference location of the NTN cell A 2420, may compare the verified distance and a distance threshold, and may perform measurement for cell reselection (S215). In detail, for example, if the distance between the UE 2410 and the reference location becomes greater than the distance threshold, the UE 2410 may perform measurement for cell reselection. As another example, if the distance between the UE 2410 and the reference location is less than the distance threshold, the UE 2410 may not perform measurement for cell reselection. Here, the UE may perform reference location update (S220). For example, in a case in which the distance between the UE 2410 and the reference location is less than the distance threshold, the UE 2410 may perform reference location update if the timer expires. Also, for example, in a case in which the distance between the UE 2410 and the reference location is less than the distance threshold, the UE 2410 may update the reference location of the NTN cell A 2420 if preset Unix time or preset SFN interval is reached.

In detail, for example, a case in which the timer is set to 1 minute in the reference location update timer configured in the UE 2410 may be considered. That is, the timer may be a time after 1 minute elapses from SFN and subframe indicated by epoch time of the NTN cell A 2420. As another example, the reference location update timer may be indicted as an SFN interval. In detail, for example, when the SFN interval is configured as 3 and epoch time indicated by system information indicates SFN 0 and subframe 3, the reference location may be updated in SFN 3, SFN 6, ... SFN X. Here, SFN 3, SFN 6, ... SFN X may refer to a point at which SFN Modulo SFN interval = 0. Then, if the distance between the UE 2410 and the reference location of the NTN cell A 2420 becomes greater than the distance threshold, signal strength of a neighbor cell may be measured for cell reselection (S230). For example, the UE 2410 may select an NTN cell B 2430 through a cell ranking procedure. Then, the UE 2410 in the RRC idle state may receive system information from the NTN cell B 2430 (S240). Here, the system information may include a reference location update timer of the NTN cell B 2430. Here, the reference location update timer may be set based on at least one of the timer, Unix time, and SFN interval. Also, the system information may be indicated to the UE 2410 by including the initial reference location. Then, the UE 2410 may perform camping on the NTN cell B 2430 (S250). The UE 2410 may determine a reference location of the NTN cell B 2430 and then, may verify a distance from the reference location and may perform measurement for cell reselection (S255). For example, if the distance between the UE 2410 and the reference location is less than the distance threshold, the UE 2410 may not perform measurement for cell reselection. On the contrary, if the distance between the UE 2410 and the reference location is greater than the distance threshold, the UE 2410 may perform measurement for cell reselection.

As another example, multiple epoch time and reference location information list may be configured as an RRC message (system information, RRC release). The UE may verify a reference location used at specific epoch time. Here, epoch time may be provided in units of date, hour, minute, and second, and the reference location may be expressed as ellipse-shaped coordinates, such as ellipsoid-point described above. For example, epoch time may be a value that is expressed as an integer value and expressed in a specific unit based on a specific point in time. In detail, for example, epoch time may be a value that is expressed in units of 10 ms from 00:00:00 on January 1, 1900, as "INTEGER (0..549755813887)," but may not be limited thereto. For example, Table 9 shows reference location list. Referring to Table 9, epoch time may be configured at 5-minute intervals and the reference location used by the UE every 5 minutes may be indicated as ellipsoid-type coordinate ellipsoid-point. Here, Table 9 below is only an example and may not be limited thereto. As another example, an epoch time interval may be set as 10 minutes and the reference location may be indicated as ellipsoid-point corresponding to "2022-06-29 02:00:00.000" and ellipsoid-point corresponding to "2022-06-29 02: 10:00.000."

That is, the UE may acquire information on epoch time set at preset intervals and reference location information corresponding thereto through the RRC message, and may verify the reference location through this. As another example, epoch time may be indicated using SFN and subframe number and may indicate at which point the UE is to use a specific reference location.

[Table 9]

| Epoch time | Reference location (Ellipsoid-point) |
| --- | --- |
| 2022-06-29 02:00:00.000 | Reference location 1 |
| 2022-06-29 02:05:00.000 | Reference location 2 |
| 2022-06-29 02:10:00.000 | Reference location 3 |
| 2022-06-29 02:15:00.000 | Reference location 4 |
| 2022-06-29 02:20:00.000 | Reference location 5 |
| 2022-06-29 02:25:00.000 | Reference location 6 |
| 2022-06-29 02:30:00.000 | Reference location 7 |

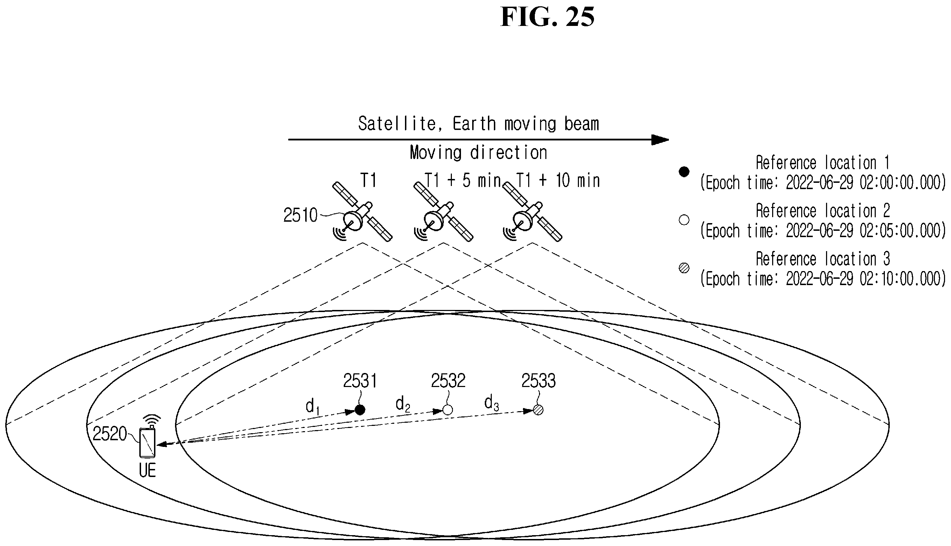

FIG. 25 illustrates satellite movement and a change in a reference location applicable to the present disclosure. Referring to FIG. 25, a satellite 2510 may have non-geo stationary orbit (NGSO) non-steerable beams or fixed beams and its service area may vary according to its movement. Therefore, the satellite may move every T1, T1 + 5 min, and T1 + 10 min, and the service area may also move. However, it is only an example and may not be limited to the aforementioned embodiment. Here, a network may indicate a reference location list at preset intervals of epoch time. For example, the preset interval may be 5 minutes, but may not be limited thereto. A UE may receive the reference location list through an RRC message (system information, RRC release) and may perform measurement for cell reselection depending on a distance between the UE and a reference location.

In detail, for example, referring to FIG. 25, a UE 2520 may be preset at a fixed location. Here, the UE 2520 may verify a distance between a reference location 1 2531 and the UE 2520 between T1 and T1+5 min (e.g., 2022-06-29 02:00:00.000 ~ 2022-06-29 02:05:00.000). Also, the UE 2520 may verify a distance between a reference location 2 2532 and the UE 2520 between T1+5min and T1+10 min (e.g., 2022-06-29 02:05:00.000 ~ 2022-06-29 02:10:00.000). Also, the UE 2520 may verify a distance between a reference location 3 2533 and the UE 2520 between T1+10 min and T1+15 min (e.g., 2022-06-29 02:10:00.000 ~ 2022-06-29 02:15:00.000). Here, if a distance from the reference location is greater than a distance threshold, the UE may perform measurement for cell reselection.

In detail, for example, a case in which the distance threshold is set to a value greater than $d_1$ and less than $d_2$ may be considered. Here, the UE 2520 may perform measurement for cell reselection at epoch time (2022-06-29 02:05:00.000). That is, since the distance ($d_1$) between the reference location 1 2531 and the UE 2520 is less than the distance threshold between T1 and T1+5 min, the UE 2520 may not perform measurement for cell reselection. On the contrary, since the distance ($d_2$) between the reference location 2 2532 and the UE 2520 is greater than the distance threshold in the time between T1+5 min and T1+10 min, the UE 2520 may perform measurement for cell reselection.

As another example, in Table 10 below, epoch time may be indicated using SFN and subframe. Therefore, reference location update may be performed in specific SFN and subframe. In more detail, referring to FIG. 25, the UE 2520 may verify the distance between the reference location 1 2531 and the UE 2520 in SFN 100 and subframe 2, and may perform measurement for cell reselection if the distance is greater than the distance threshold. Then, the UE 2520 may verify the distance between the reference location 2 2532 and the UE 2520 in SFN 200 and subframe 2, and then may perform measurement for cell reselection if the distance is greater than the distance threshold.

[Table 10]

| Epoch time (SFN & Subframe number) | Reference location (Ellipsoid-point) |
|---|---|
| 100 & 2 | Reference location 1 |
| 200 & 2 | Reference location 2 |
| 300 & 2 | Reference location 3 |
| 400 & 3 | Reference location 4 |
| 500 & 3 | Reference location 5 |
| 600 & 3 | Reference location 6 |
| 700 & 9 | Reference location 7 |

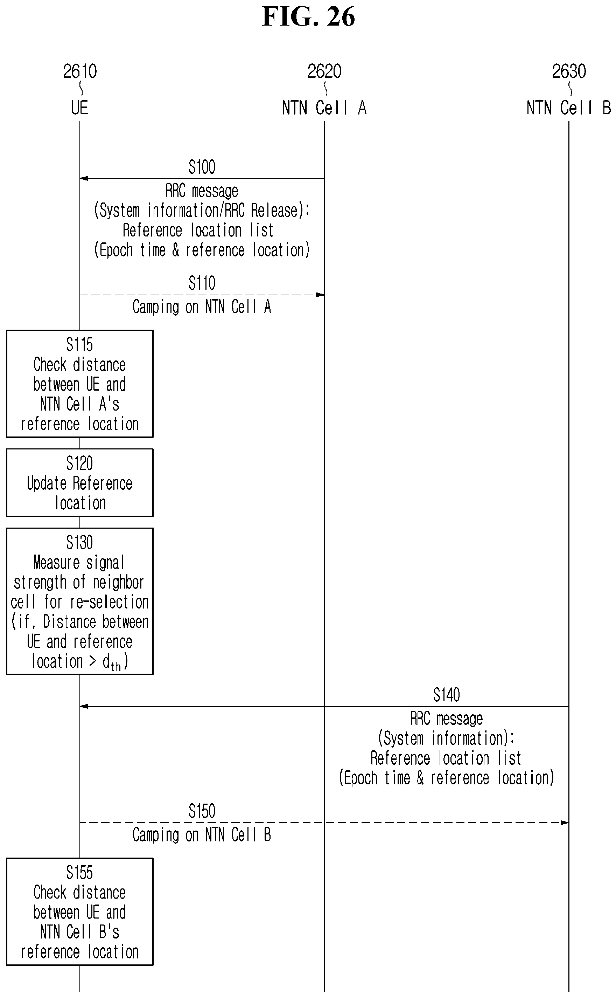

FIG. 26 illustrates a reference location list-based signaling procedure and a reference location update procedure applicable to present disclosure.

A UE 2610 may be in an RRC connected state with a network through an NTN cell A 2620. Also, the UE 2610 may perform connection to the network and then may shift to an RRC idle state. Here, the UE 2610 may receive an RRC message (system information, RRC release) from the NTN cell A 2620 (S100). Here, the RRC message may include a reference location list. Here, as described above, the reference location list may be expressed as epoch time and reference location information. Here, the UE 2610 in the RRC connected state may receive an RRC release message and may shift to the RRC idle state. Also, the UE 2610 in the RRC idle state may receive system information. Also, the UE 2610 in the RRC idle state may be camping on the NTN cell A 2620 (S110). Here, the UE 2610 in the RRC idle state may verify a distance between a reference location of the NTN cell A 2620 and the UE 2610 based on the reference location list, may compare the distance and a distance threshold, and may perform measurement for cell reselection. In detail, for example, if the distance between the UE 2610 and the reference location becomes greater than the distance threshold, the UE 2610 may perform measurement for cell reselection (S115). As another example, if the distance between the UE 2610 and the reference location is less than the distance threshold, the UE 2610 may not perform measurement for cell reselection (S115). If the distance between the UE 2610 and the reference location is less than the distance threshold, the reference location may be updated as a preset time elapses. In detail, when subsequent epoch time within the reference location list is reached or when subsequent SFN and subframe number are reached, the reference location of the NTN cell A 2620 may be updated (S120). For example, when the reference location list of Table 9 is configured in the UE 2610, previous time and the reference location of the NTN cell A 2620 may be "2022-06-29 02:00:00.000" and reference location 1 (Ellipsoid-point) corresponding thereto. Also, subsequent time and reference location of the NTN cell A 2620 may be "2022-06-29 02:05:00.000" and reference location 2 (Ellipsoid-point) corresponding thereto.

On the contrary, when the reference location list as shown in Table 10 is configured in the UE 2610, previous time and reference location of the NTN cell A 2620 may be reference location 1 (Ellipsoid-point) corresponding to SFN 100, subframe 2. Also, subsequent time and reference location of the NTN cell A 2620 may be reference location 2 (Ellipsoid-point) corresponding to SFN 200, subframe 2. Based on the above, the UE 2610 may update the reference location, and may compare the distance between the reference location of the NTN cell A 2620 and the UE 2610 to the distance threshold (S130). Here, if the distance between the reference location of the NTN cell A 2620 and the UE 2610 is greater than the distance threshold, the UE 2610 may measure signal strength of a neighbor cell for cell reselection. Here, the UE 2610 may select an NTN cell B 2630 through a cell ranking procedure. The UE 2610 in the RRC idle state may receive system information from the NTN cell B 2630 and may receive reference location list information of the NTN cell B 2630 (S140). Also, the UE 2610 may perform camping on the NTN cell B 2630 (S150). Here, the UE 2610 may verify a distance between the reference location of the NTN cell B 2630 and the UE 2610 and may determine measurement for cell reselection (S155). For example, if the distance between the reference location of the NTN cell B 2630 and the UE 2610 is less than the distance threshold, the UE 2610 may not perform measurement for cell reselection. On the contrary, as described above, if the distance between the reference location of the NTN cell B 2630 and the UE 2610 is greater than the distance threshold, the UE 2610 may perform measurement for cell reselection.

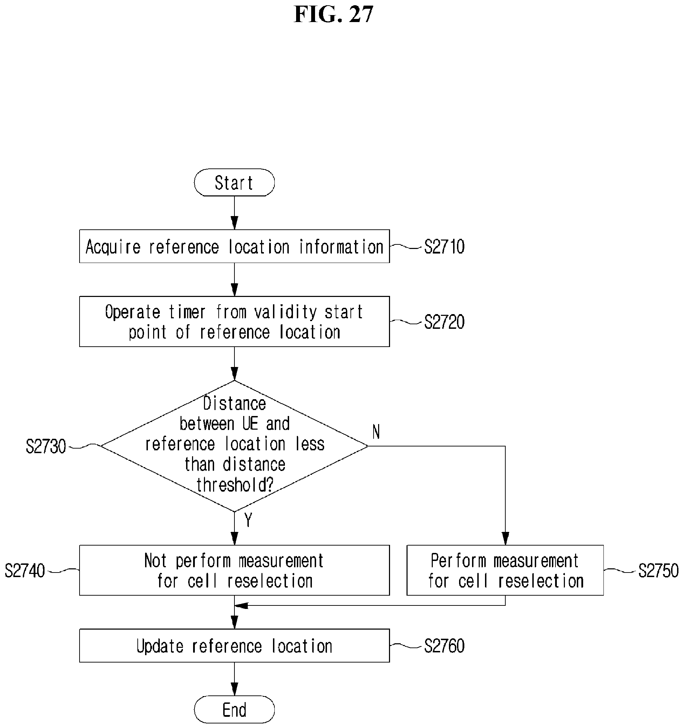

FIG. 27 is a flowchart illustrating a reference location update method to which the present disclosure may apply. Referring to FIG. 27, a UE may acquire reference location information (S2710). Here, the reference location information may be acquired through system information. Also, the UE may acquire at least one of timer information on an uplink synchronization validity time and a reference location update timer through the system information. Also, the UE may acquire epoch time information through the system information and may determine a validity start point for the aforementioned timer based thereon. That is, at least one of the timer information on the uplink synchronization validity time and the reference location update timer may start at the validity start point (S2720). Here, for example, if a distance between the UE and the reference location is less than a distance threshold (S2730), the UE may not perform measurement for cell reselection (S2740). That is, the UE may maintain a current cell. On the contrary, if the distance between the UE and the reference location is greater than the distance threshold (S2730), the UE may perform measurement for cell reselection (S2750). That is, the UE may perform measurement for cell reselection by comparing the distance between the UE and the reference location to the distance threshold.

Also, the UE may perform reference location update before or after the aforementioned timer expires (S2760). Here, the reference location update may be performed based on system information acquisition. That is, based on at least one of the timer information on the validity time and the reference location update timer described above, the UE may acquire the system information before or after the timer expires . Here, the system information may include reference location information, and the UE may perform reference location update based on the corresponding reference location information.

As another example, the UE may perform reference location update based on satellite ephemeris information. Here, the reference location update may be performed based on the reference location update timer. For example, the UE may operate the reference location update timer at the aforementioned validity start point. Here, the reference location update timer may be set based on at least one of the timer, Unix time, and SFN. Here, as described above, in response to arrival of the reference location update timer, the UE may perform the reference location update based on satellite ephemeris information.

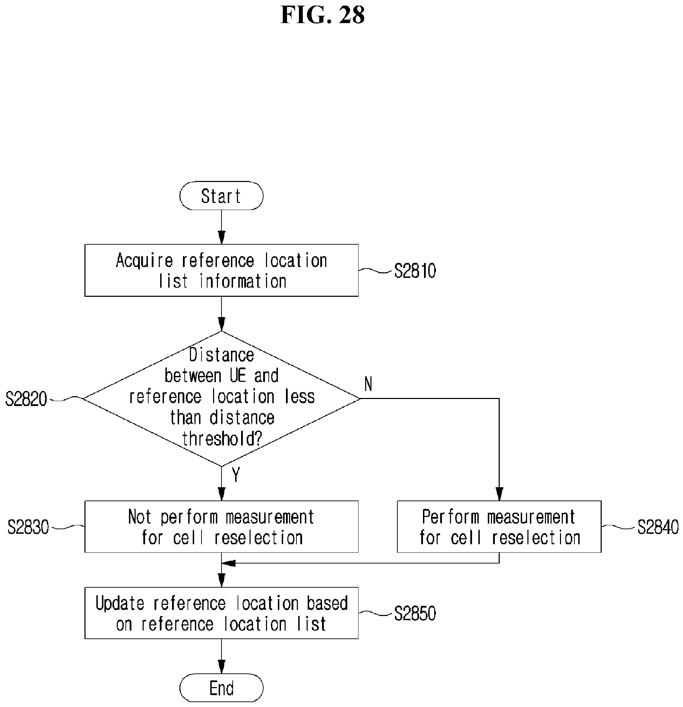

FIG. 28 is a flowchart illustrating a reference location update method to which the present disclosure may apply. Referring to FIG. 28, a UE may acquire reference location list information (S2810). Here, the reference location list information may be acquired through system information. For example, the reference location list information may be configured with specific epoch time and reference location. Here, if a distance between the UE and the reference location is less than a distance threshold (S2820), the UE may not perform measurement for cell reselection (S2830). That is, the UE may maintain a current cell. On the contrary, if the distance between the UE and the reference location is greater than the distance threshold (S2820), the UE may perform measurement for cell reselection (S2840). That is, the UE may perform measurement for cell reselection by comparing the distance between the UE and the reference location to the distance threshold.

Also, the UE may perform reference location update based on a reference location list (S2850). Here, if specific epoch time arrives based on the reference location list information, the UE may update the reference location with the corresponding reference location. That is, the UE may apply a reference location corresponding to a specific point in time through the reference location list information and may perform measurement based thereon.

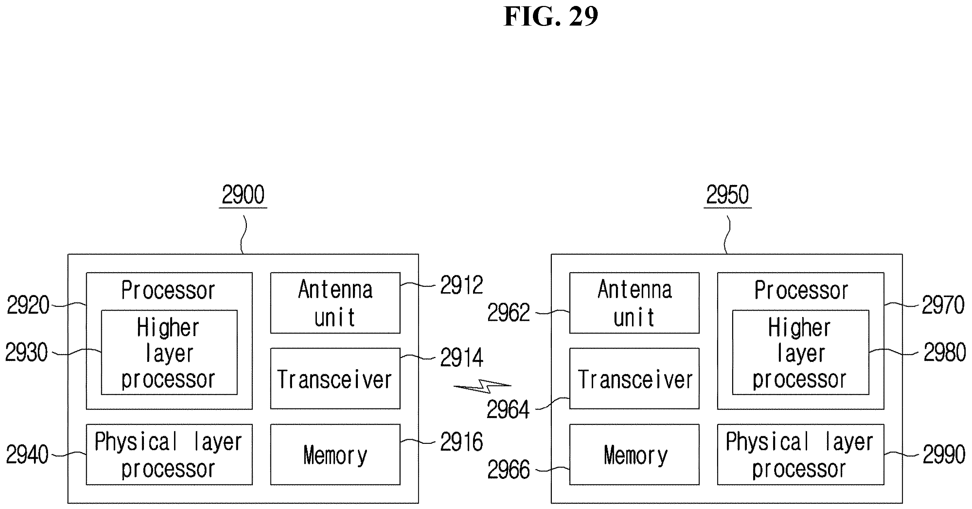

FIG. 29 is a diagram illustrating a first apparatus and a second apparatus to which the present disclosure may be applied.

Referring to FIG. 29, the first apparatus (2900) and the second apparatus (2950) perform communication with each other. At this time, as an example, the first apparatus (2900) may be a base station and the second apparatus (2950) may be a user equipment (UE) device. As another example, both the first apparatus (2900) and the second apparatus (2950) may be UE devices. That is, the first apparatus (2900) and the second apparatus (2950) may be apparatus that perform communication with each other based on NR-based communication.

As an example, a case may be considered where the first apparatus (2900) is a base station and the second apparatus (2950) is a UE device. At this time, the base station device 2900 may include a processor 2920, an antenna unit 2912, a transceiver 2914, and a memory 2916. The processor 2920 performs a baseband-related signal processing and may include a higher-layer processor 2930 and a physical layer processor 2940. The higher layer processor 2930 may process the operation of a medium access control (MAC) layer, a radio resource control (RRC) layer, or a higher layer thereof. The physical layer processor 2940 may process the operation of the physical (PHY) layer (e.g., uplink receive signal processing, downlink transmission signal processing). Also, to perform baseband-related signal processing, the processor 2920 may also control the operation of the base station device 2900 as a whole. The antenna unit 2912 may include one or more physical antennas, and may support the multiple input multiple output (MIMO) transmission and reception in the case of including a plurality of antennas. Also, beamforming can be supported. The memory 2916 may store computationally processed information of the processor 2920, software, operating systems, applications, and the like related to the operation of the base station device 2900, and may include components such as buffers. The processor 2920 of the base station 2900 may be configured to implement the operation of the base station in the example described herein.

The UE device 2950 may include a processor 2970, an antenna unit 2962, a transceiver 2964, and a memory 2966. For example, in the present invention, the UE device 2950 may perform communication with the base station device 2900. As another example, in the present invention, the UE device 2950 may perform SL communication with another UE device. That is, the UE device 2950 of the present invention refers to a device capable of communicating with at least one of the base station device 2900 and the other UE devices and is not limited to communication with a specific device. The processor 2970 performs baseband-related signal processing and may include a higher-layer processor 2980 and a physical layer processor 2990. The higher layer processor 2980 may process the operation of the MAC layer, the RRC layer, or the higher layer. The physical layer processor 2990 may process the operations of the PHY layer (e.g., downlink receive signal processing, uplink transmission signal processing). Also, to perform baseband-related signal processing, the processor 2970 may also control the operation of the UE device 2950 as a whole. The antenna unit 2962 may include one or more physical antennas, and may support MIMO transmission and reception in the case of including a plurality of antennas. Also, beamforming can be supported. The memory 2966 may store computationally processed information of the processor 2970, software, operating systems, applications, and the like related to the operation of the UE device 2950, and may include components such as buffers. The UE device 2950 according to an example of the present invention may be associated with a vehicle. For example, the UE device 2950 may be integrated into the vehicle, may be located in the vehicle, or may be located on the vehicle. Also, the UE device 2950 according to the present invention may be the vehicle itself. Also, the UE device 2950 according to the present invention may be at least one of a wearable terminal, AV/VR, an IoT terminal, a robot terminal, and a public safety terminal. The UE device 2950 to which the present invention may apply may include various types of any communication devices that support interactive services using sidelink for services, such as Internet access, service performance, navigation, real-time information, autonomous driving, and safety and risk diagnosis. Also, an AR/VR device capable of performing a sidelink operation or any type of communication device capable of performing a relay operation as a sensor may be included.

Here, the vehicle/terminal to which the present invention may apply include an autonomous vehicle/driving terminal, a semi-autonomous vehicle/driving terminal, non-autonomous vehicle/terminal, and the like. Meanwhile, although it is described that the UE device 2950 according to an example of the present invention is associated with the vehicle, at least one of the UEs may not be associated with the vehicle. This is only an example and should not be interpreted to limit application of the present invention to the described example. Also, the UE device 2950 according to an example of the present invention may include various types of communication devices that may perform cooperation to support interactive services using sidelink. That is, in addition to a case in which the UE device 2950 directly supports interactive services using the sidelink, it may be used as a cooperative device to support interactive services using the sidelink.

The UE device 2950 may acquire reference location information. Here, the reference location information may be acquired through system information. Also, the UE device 2950 may acquire at least one of timer information on an uplink synchronization validity time and reference location update timer through the system information. Also, the UE device 2950 may acquire epoch time information through the system information and may determine a validity start point for the aforementioned timer based thereon. That is, at least one of the timer information on the uplink synchronization validity time and the reference location update timer may start at the validity start point. Here, for example, if a distance between the UE device 2950 and the reference location is less than a distance threshold, the UE device 2950 may not perform measurement for cell reselection. That is, the UE device 2950 may maintain a current cell. On the contrary, if the distance between the UE and the reference location is greater than the distance threshold, the UE device 2950 may perform the measurement for cell reselection. That is, the UE device 2950 may perform the measurement for cell reselection by comparing the distance between the UE device 2950 and the reference location to the distance threshold.

Also, the UE device 2950 may perform reference location update before or after the aforementioned timer expires. Here, the reference location update may be performed based on system information acquisition. That is, based on at least of the timer information on the validity time and the reference location update timer, the UE device 2950 may acquire the system information before or after the timer expires. Here, the system information may include reference location information, and the UE device 2950 may perform reference location update based on the corresponding reference location information.

As another example, the UE device 2950 may perform reference location update based on satellite ephemeris information. Here, the reference location update may be performed based on the reference location update timer. For example, the UE device 2950 may operate the reference location update timer at the aforementioned validity start point. Here, the reference location update timer may be set based on at least one of the timer, Unix time, and SFN. Here, as described above, in response to arrival of the reference location update timer, the UE device 2950 may perform the reference location update based on satellite ephemeris information. Also, for example, when the distance between the UE and the reference location becomes greater than the threshold based on the reference location or the updated reference location, the UE device 2950 may perform measurement for cell reselection and may select an optimal cell.

As another example, the UE device 2950 may acquire reference location list information. Here, the reference location list information may be acquired through the system information. For example, the reference location list information may be configured with a specific epoch time and reference location. Here, for example, if the distance between the UE device 2950 and the reference location is less than the distance threshold, the UE device 2950 may not perform measurement for cell reselection. That is, the UE device 2950 may maintain a current cell. On the contrary, if the distance between the UE and the reference location is greater than the distance threshold, the UE device 2950 may perform measurement for cell reselection. That is, the UE device 2950 may perform the measurement for cell reselection by comparing the distance between the UE device 2950 and the reference location to the distance threshold.

Also, the UE device 2950 may perform reference location update based on a reference location list. Here, if a specific epoch time arrives based on the reference location list information, the UE device 2950 may update the reference location with the corresponding reference location. That is, the UE device 2950 may apply a reference location corresponding to a specific point in time through the reference location list information and may perform measurement based thereon. Also, for example, when the distance between the UE device 2950 and the reference location becomes greater than the threshold based on the reference location or the updated reference location, the UE device 2950 may perform measurement for cell reselection and may select an optimal cell.

Also, various embodiments of the present disclosure may be implemented by hardware, firmware, software, or combination thereof. In the case of implementation by hardware, the embodiments may be implemented by one or more application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine-executable instructions (e.g., OS, application, firmware, program, etc.) such that the operations according to the method of various embodiments may be executed on an apparatus or a computer, and a non-transitory computer-readable medium storing such software or instructions to be executable on the apparatus or the computer.

Various embodiments of the present disclosure are to explain the representative aspects of the present disclosure rather than listing all the possible combinations and matters described in the various embodiments may be applied alone or in combination of two or more embodiments.

INDUSTRIAL APPLICABILITY

The above may also be applied to other systems.

**Claims**

1.    A method of updating, by a user equipment (UE), a reference location based on non-terrestrial networks (NTN) in a wireless communication system, the method comprising:

acquiring reference location related information from a base station;
as an operation of determining whether a distance between the UE and a reference location is less than a distance threshold based on the reference location related information, not performing measurement for cell reselection if the distance between the UE and the reference location, and performing the measurement for the cell reselection if the distance between the UE and the reference location is greater than the distance threshold; and
performing reference location update based on a reference location related timer.

2.    The method of claim 1, wherein the reference location related information includes at least one of reference location information, satellite ephemeris information, reference location update timer information, uplink synchronization validity time information, and epoch time information.

3.    The method of claim 2, wherein a validity start point to start at least one of a reference location update timer and a timer for an uplink synchronization validity time is determined based on the epoch time information, and the reference location update is performed by acquiring system information including the reference location information.

4.    The method of claim 2, wherein a validity start point to start a reference location update timer is determined based on the epoch time information, and the reference location update is performed through satellite ephemeris information based on the reference location update timer.

5. The method of claim 1, wherein the reference location related information includes reference location list information,

the reference location list information is configured with epoch time and a reference location corresponding to the epoch time, and
the reference location update is performed based on the reference location list information.

# FIG. 1

Downlink frame *i*

Uplink frame *i*

$N_{TA} \, T_s$

# FIG. 2

One sub frame

$N_{\text{sub frame}}^{\text{symbols}\,\mu}$ OFDM symbols

$k = N_{RB}^{\mu}\, N_{sc}^{RB} - 1$

Resource block

Resource element
$-(k,\bar{l})$ in resource grid
$-(k,l)$ in resource block

$N_{RB}^{\mu}\, N_{sc}^{RB}$ subcarriers

$N_{sc}^{RB}$ subcarriers

$k = 0$

$l = 0$

$\bar{l} = 14 \cdot 2^{\mu} - 1$

EP 4 572 442 A1

# FIG. 3

FIG. 4

FIG. 5

EP 4 572 442 A1

## FIG. 6

UE — Satellite — NTN Gateway — gNB — 5GC:UPF

UE: PDU, SDAP, PDCP, RLC, MAC, PHY

gNB: SDAP | GTP-U, PDCP | UDP, RLC | IP, MAC | L2, PHY | L1

5GC:UPF: PDU, GTP-U, UDP, IP, L2, L1

NR-Uu, NR-Uu, NG-U

**FIG. 7**

EP 4 572 442 A1

# FIG. 8

- Common TA (Tcom)=2*$D_0$/c
- UE specific differential TA for xth UE ($T_{UEx}$)=2*($D_{1x}$−$D_0$)/c
- Full TA (Tfull)=Tcom+$T_{UEx}$

(a) Regenerative payload

- Common TA (Tcom)=2*($D_{01}$+$D_{02}$)/c
- UE specific differential TA for xth UE ($T_{UEx}$)=2*($D_{1x}$−$D_{01}$)/c
- Full TA (Tfull)=Tcom+$T_{UEx}$

(b) Transparent payload

# FIG. 9

Satellite moving direction

920 T4
Satellite#2

910 T1
Satellite#1

T2
Satellite#1

T3
Satellite#1

PCI#1 or
another PCI

PCI#1

PCI#1

PCI#1

fixed cell

# FIG. 10

# FIG. 11

(a)

(b)

## FIG. 12

1210
Sat 1, Earth fixed beam

1220
Sat 2, Earth fixed beam

T1      T2      T3          T1      T2      T3

● Reference location

EP 4 572 442 A1

# FIG. 13

# FIG. 14

Satellite, Earth moving beam

Moving direction

T1    T2

1410

UE1  1421

UE2  1422    ● Reference location

EP 4 572 442 A1

## FIG. 15

Satellite, Earth moving beam

Moving direction

T1

1510

T2

Reference location(T1)

Reference location(T2)

UE1 1521

UE2 1522

# FIG. 16

EP 4 572 442 A1

SIB 19:
- Epochtime (SFN 0, Subframe 4)
- Common TA
- Ephemeris
- UlSyncValidityDuration

SFN 0       SFN 1       SFN 500

| 0 | 1 | 2 | 3 | 4 | 5 | 6 | 7 | 8 | 9 | 0 | 1 | 2 | 3 | 4 | 5 | 6 | 7 | 8 | 9 | ••• | 0 | 1 | 2 | 3 | 4 | 5 | 6 | 7 | 8 | 9 |

UlSyncValidityDuration: s5
(s5, s10, s15, s20, s25, s30, s35, s40, s45, s50, s55, s60, s120, s180, s240)

# FIG. 17

EP 4 572 442 A1

SIB 19:
- Epochtime (SFN 0, Subframe 4)
- Common TA
- Ephemeris
- Reference location
- UlSyncValidityDuration

SFN 0    SFN 1    SFN 500

| 0 | 1 | 2 | 3 | 4 | 5 | 6 | 7 | 8 | 9 | 0 | 1 | 2 | 3 | 4 | 5 | 6 | 7 | 8 | 9 | ··· | 0 | 1 | 2 | 3 | 4 | 5 | 6 | 7 | 8 | 9 |

UlSyncValidityDuration: s5
(s5, s10, s15, s20, s25, s30, s35, s40, s45, s50, s55, s60, s120, s180, s240)

# FIG. 18

SIB 19:
- Epochtime (SFN 0, Subframe 4)
- Reference location 1
- ReferenceLocationUpdateTimer

SIB 19:
- Epochtime (SFN 1, Subframe 4)
- Reference location 2
- ReferenceLocationUpdateTimer

SIB 19:
- Epochtime (SFN 2, Subframe 4)
- Reference location 3
- ReferenceLocationUpdateTimer

SFN 0   SFN 1   SFN 2

| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 |

ReferenceLocationUpdateTimer : 10ms   ReferenceLocationUpdateTimer : 10ms   ReferenceLocationUpdateTimer : 10ms

# FIG. 19

SIB 19:
- Epochtime (SFN X, Subframe 4)
- Common TA
- Ephemeris
- Reference location
- UlSyncValidityDuration
- ReferenceLocationUpdateTimer

SIB 19:
- Epochtime (SFN X+100, Subframe 4)
- Common TA
- Ephemeris
- Reference location
- UlSyncValidityDuration
- ReferenceLocationUpdateTimer

SIB 19:
- Epochtime (SFN X+200, Subframe 4)
- Common TA
- Ephemeris
- Reference location
- UlSyncValidityDuration
- ReferenceLocationUpdateTimer

SIB 19:
- Epochtime (SFN X+1000, Subframe 4)
- Common TA
- Ephemeris
- Reference location
- UlSyncValidityDuration
- ReferenceLocationUpdateTimer

SFN X | SFN X + 100 | SFN X + 200 | SFN X + 1000

ReferenceLocationUpdateTimer: s1

ReferenceLocationUpdateTimer: s1

UlSyncValidityDuration: s10

# FIG. 20

2010
UE

2020
NTN Cell A

S300
RRC message
(System information/RRC Release):
- ReferenceLocationUpdateTimer
- Reference location
- Epoch time (SFN & Subframe)
- Ephemeris
- UlSyncValidityDuration
- etc

S310
Camping on NTN Cell A

S320 UlSyncValidityDuration And/or ReferenceLocationUpdateTimer

S330
RRC message
(System information/RRC Release):
- ReferenceLocationUpdateTimer
- Reference location
- Epoch time (SFN & Subframe)
- Ephemeris
- UlSyncValidityDuration
- etc

# FIG. 21

# FIG. 22

2210 — 2030-11-10 11:00:00.000
(SFN 2 & subframe 4)

2030-11-10 11:05:00.000
(SFN 502 & subframe 4)

z

$\varphi$(latitude)

$\lambda$
(longitude)

y

x

Satellite NTN moving cell

Coverage area

● Reference location

EP 4 572 442 A1

# FIG. 23

Satellite, Earth moving beam

Moving direction

2310

Ephemeris (2030-11-10 11:00:00.000)
System information
- Ephemris
- Epochtime (SFN X & Subframe 0)
- Initial reference location
- Reference location update timer

Ephemeris (2030-11-10 11:05:00.000)
System information
- Ephemris
- Epochtime (SFN Y & Subframe 0)
- Initial reference location
- Reference location update timer

$d_1$ $d_2$ $d_3$

UE

● Initial Reference location
(Epoch time: SFN X & Subframe 0
or SFN Y & Subframe 0)

○ Updated Reference location
(Epoch time: SFN X & Subframe 0 + 1min
or SFN Y & Subframe 0 + 1min)

⊘ Updated Reference location
(Epoch time: SFN X & Subframe 0 + 2min
or SFN Y & Subframe 0 + 2min)

# FIG. 24

**FIG. 25**

Satellite, Earth moving beam
Moving direction

T1    T1 + 5 min   T1 + 10 min

2510

● Reference location 1
(Epoch time: 2022-06-29 02:00:00.000)

○ Reference location 2
(Epoch time: 2022-06-29 02:05:00.000)

◎ Reference location 3
(Epoch time: 2022-06-29 02:10:00.000)

2531    2532    2533

$d_1$    $d_2$    $d_3$

2520

UE

EP 4 572 442 A1

# FIG. 26

# FIG. 27

Start

Acquire reference location information — S2710

Operate timer from validity start point of reference location — S2720

S2730 — Distance between UE and reference location less than distance threshold?

S2740 — Not perform measurement for cell reselection

Perform measurement for cell reselection — S2750

Update reference location — S2760

End

# FIG. 28

```
                    ┌──────────┐
                    │  Start   │
                    └──────────┘
                          │
                          ▼
      ┌───────────────────────────────────┐
      │     Acquire reference location     │──── S2810
      │          list information          │
      └───────────────────────────────────┘
                          │
                          ▼
                    ╱Distance╲
                  ╱ between UE and ╲              N
   S2820 ──────╱ reference location less ╲───────────────┐
                ╲  than distance        ╱                 │
                  ╲   threshold?      ╱                   │
                    ╲              ╱                       │
                          │ Y                              │
                          ▼                                ▼
   S2830 ─┌──────────────────────┐    ┌──────────────────────┐
          │  Not perform measurement │ │   Perform measurement  │── S2840
          │    for cell reselection  │ │    for cell reselection │
          └──────────────────────┘    └──────────────────────┘
                          │                       │
                          ◄───────────────────────┘
                          ▼
      ┌───────────────────────────────────┐
      │ Update reference location based    │──── S2850
      │     on reference location list     │
      └───────────────────────────────────┘
                          │
                          ▼
                    ┌──────────┐
                    │   End    │
                    └──────────┘
```

EP 4 572 442 A1

**FIG. 29**

## INTERNATIONAL SEARCH REPORT

| International application No. |
| --- |
| **PCT/KR2023/011183** |

### A. CLASSIFICATION OF SUBJECT MATTER

**H04W 64/00**(2009.01)i; **H04W 36/00**(2009.01)i; **H04W 36/32**(2009.01)i; **H04W 24/08**(2009.01)i; **H04W 84/06**(2009.01)i; **H04B 7/185**(2006.01)i

According to International Patent Classification (IPC) or to both national classification and IPC

### B. FIELDS SEARCHED

Minimum documentation searched (classification system followed by classification symbols)

H04W 64/00(2009.01); H04B 7/185(2006.01); H04W 36/00(2009.01); H04W 48/20(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기준위치(reference location), 업데이트(update), 거리(distance), 타이머 (timer), 임계값(threshold), NTN, 측정(measurement)

### C. DOCUMENTS CONSIDERED TO BE RELEVANT

| Category* | Citation of document, with indication, where appropriate, of the relevant passages | Relevant to claim No. |
| --- | --- | --- |
| X | US 2022-0104082 A1 (TELEFONAKTIEBOLAGET LM ERICSSON (PUBL)) 31 March 2022 (2022-03-31) See paragraphs [0082]-[0091], [0117]-[0118] and [0120]; and claims 1-10. | 1,5 |
| Y | | 2-4 |
| Y | CMCC. Discussion on RAN2 LS on NTN-specific SIB. R1-2201840, 3GPP TSG RAN WG1 #108-e, e-Meeting. 14 February 2022. See section 2.3. | 2-4 |
| A | ZTE CORPORATION et al. Report of [AT117-e][102][NTN] Idle mode open issues – 3rd Round. R2-2203566, 3GPP RAN WG2 Meeting #117-e, eMeeting. 12 March 2022. See sections 4.1-4.2 and 4.5-4.7. | 1-5 |
| A | WO 2021-000825 A1 (HUAWEI TECHNOLOGIES CO., LTD.) 07 January 2021 (2021-01-07) See claims 1-7. | 1-5 |

☑ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 October 2023** | **26 October 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/011183** |

**C.   DOCUMENTS CONSIDERED TO BE RELEVANT**

| Category* | Citation of document, with indication, where appropriate, of the relevant passages | Relevant to claim No. |
| --- | --- | --- |
| A | WO 2016-183025 A1 (QUALCOMM INCORPORATED) 17 November 2016 (2016-11-17)<br>   See paragraphs [0107]-[0111]. | 1-5 |

Form PCT/ISA/210 (second sheet) (July 2022)

# EP 4 572 442 A1

## INTERNATIONAL SEARCH REPORT
### Information on patent family members

International application No.

**PCT/KR2023/011183**

| Patent document cited in search report | | | Publication date (day/month/year) | Patent family member(s) | | | Publication date (day/month/year) |
|---|---|---|---|---|---|---|---|
| US | 2022-0104082 | A1 | 31 March 2022 | EP | 3912393 | A1 | 24 November 2021 |
| | | | | JP | 2022-516948 | A | 03 March 2022 |
| | | | | JP | 7221397 | B2 | 13 February 2023 |
| | | | | WO | 2020-148582 | A1 | 23 July 2020 |
| WO | 2021-000825 | A1 | 07 January 2021 | CN | 112153707 | A | 29 December 2020 |
| | | | | CN | 112153707 | B | 25 February 2022 |
| | | | | CN | 114650577 | A | 21 June 2022 |
| | | | | US | 2022-0124581 | A1 | 21 April 2022 |
| WO | 2016-183025 | A1 | 17 November 2016 | BR | 112017024187 | A2 | 17 July 2018 |
| | | | | CA | 2980775 | A1 | 17 November 2016 |
| | | | | CA | 2980775 | C | 01 December 2020 |
| | | | | CN | 107637131 | A | 26 January 2018 |
| | | | | CN | 107637131 | B | 19 October 2021 |
| | | | | CN | 113810885 | A | 17 December 2021 |
| | | | | EP | 3295718 | A1 | 21 March 2018 |
| | | | | EP | 3295718 | B1 | 08 September 2021 |
| | | | | JP | 2018-520548 | A | 26 July 2018 |
| | | | | JP | 2020-145701 | A | 10 September 2020 |
| | | | | JP | 6891128 | B2 | 18 June 2021 |
| | | | | JP | 7187502 | B2 | 12 December 2022 |
| | | | | KR | 10-1994022 | B1 | 27 June 2019 |
| | | | | KR | 10-2018-0008466 | A | 24 January 2018 |
| | | | | KR | 10-2019-0075170 | A | 28 June 2019 |
| | | | | KR | 10-2411991 | B1 | 21 June 2022 |
| | | | | US | 10117152 | B2 | 30 October 2018 |
| | | | | US | 10609619 | B2 | 31 March 2020 |
| | | | | US | 10805855 | B2 | 13 October 2020 |
| | | | | US | 2016-0337931 | A1 | 17 November 2016 |
| | | | | US | 2019-0045420 | A1 | 07 February 2019 |
| | | | | US | 2020-0229063 | A1 | 16 July 2020 |

Form PCT/ISA/210 (patent family annex) (July 2022)